# EUROPEAN PATENT APPLICATION

(11) **EP 3 822 902 A1**
(43) Date of publication of application: **19.05.2021**
(21) Application number: 20205529.9
(22) Date of filing: 03.11.2020
(51) Int. Cl.: G06Q 30/02

(54) **SYSTEMS AND METHODS FOR CUSTOMIZATION OF REVIEWS**

(30) Priority: 15.11.2019 US 201916685446
(71) Applicant: Shopify Inc., Ottawa, ON K2P 2L8 (CA)
(72) Inventor: RIVERA, Carl, Ottawa, Ontario K2P 1L4 (CA); GHORBANI, Siavash, Ottawa, Ontario K2P 1L4 (CA); TÖRNBLOM, Valerie, Ottawa, Ontario K2P 1L4 (CA); JERNSTRÖM, Birk, Ottawa, Ontario K2P 1L4 (CA); DAHL, Jona, Ottawa, Ontario K2P 1L4 (CA)
(74) Representative: Hanna Moore + Curley

(57) **Abstract**

Methods and systems for presenting a review are described. A set of reviews is presented in response to a first event associated with a first merchant offering. The set of reviews include a plurality of selected reviews associated with the first merchant offering. At least a first review in the plurality of selected reviews is selected, from a plurality of stored reviews, based on a match of one or more attributes between a profile of the first customer and a profile of a first reviewer associated with the first review.

## Description

### FIELD

The present disclosure relates to systems and methods for customizing reviews, which may be implemented on an e-commerce platform.

### BACKGROUND

An e-commerce platform may enable a customer to purchase offerings (e.g., goods and/or services) from a merchant. Frequently, a customer who has purchased an offering may also provide a review of that offering using the e-commerce platform. A review may be provided in different formats, including text-based reviews, audio reviews and video reviews, among other possibilities.

Conventionally, when a prospective customer wishes to view a review of an offering, the customer is presented with the reviews that have been generated by different reviewers. The reviews may be presented in a generic manner (e.g., ordered chronologically). It may be difficult for the prospective customer to find a review that is relevant to that customer.

Accordingly, it would be desirable to provide a solution that is able to provide reviews that are better customized for each prospective customer.

### SUMMARY

The present disclosure describes various examples which may enable more customized creation of reviews and more customized presentation of reviews. In some examples, an affinity, similarity or match of attribute(s) (which may be generally referred to as "affinity" in the present disclosure) between a reviewer and a prospective customer may be determined. On the basis of such affinity, a prospective customer may be provided with reviews that are more likely to be relevant to the customer. Further, multiple reviews may be provided together as a set of reviews, for example in order to provide multiple video reviews together as a seamless stream. The customer may be provided with a set of reviews that includes multiple reviews for the same merchant offering, may include reviews by different reviewers.

In some examples, a reviewer may be prompted to create a new review for a merchant offering. The prompt may include a question about the offering that was asked by a customer who has affinity with the reviewer.

In some examples, a customer may be provided with a review set that includes a selection of stored reviews. The selection of reviews to include in the review set may be customized for the customer, for example based on match of attribute(s) between the customer and reviewers.

In some aspects, the present disclosure describes a system including a processor in communication with a storage. The processor is configured to execute instructions to cause the system to, in response to a first event associated with a first merchant offering, present, via a first customer electronic device associated with a first customer, a set of reviews, the set of reviews including a plurality of selected reviews associated with the first merchant offering. At least a first review in the plurality of selected reviews is selected, from a plurality of stored reviews, based on a match of one or more attributes between a profile of the first customer and a profile of a first reviewer associated with the first review.

In some aspects, the present disclosure describes a method, including: in response to a first event associated with a first merchant offering, presenting a set of reviews to a first customer, the set of reviews including a plurality of selected reviews associated with the first merchant offering. At least a first review in the plurality of selected reviews is selected, from a plurality of stored reviews, based on a match of one or more attributes between a profile of the first customer and a profile of a first reviewer associated with the first review.

In some aspects, the present disclosure describes a computer readable medium having instructions tangibly stored thereon. The instructions, when executed, cause a system to, in response to a first event associated with a first merchant offering, presenting, via a first customer electronic device associated with a first customer, a set of reviews, the set of reviews including a plurality of selected reviews associated with the first merchant offering. At least a first review in the plurality of selected reviews is selected, from a plurality of stored reviews, based on a match of one or more attributes between a profile of the first customer and a profile of a first reviewer associated with the first review.

In any of the above, the instructions may further cause the system to (or the method may include) select, from the plurality of stored reviews, at least the first review or a second review to include in the plurality of selected reviews, based on an approval indicator associated with the first or second review.

In any of the above, the instructions may further cause the system to (or the method may include) select, from the plurality of stored reviews, at least the first review or a second review to include in the plurality of selected reviews, based on a second customer having a positive response to the first or second review, and wherein one or more attributes in a profile of the second customer match with the profile of the first customer.

In any of the above, the instructions may further cause the system to (or the method may include) determine an affinity between the first reviewer or a second reviewer and the first customer; and present a third review to the first customer, the third review being associated with the first or second reviewer, the third review being presented based on the determined affinity.

In any of the above, the affinity between the first or second reviewer and the first customer may be determined based on a positive response by the first customer to the first review or a second review associated with the second reviewer.

In any of the above, the instructions may further cause the system to (or the method may include) receive a question from the first customer, the question relating to the first merchant offering or a second merchant offering; and provide an option to the first or second reviewer, via a reviewer electronic device, to create a new review based on the question, the option being provided to the first or second reviewer based on the determined affinity.

In any of the above, each of the plurality of selected reviews may be a selected video review, and the plurality of selected reviews may be presented as a seamless video stream comprising the plurality of selected video reviews.

In any of the above, the plurality of selected video reviews may be ordered in the set of reviews based on number of matched attributes between profiles of respective reviewers associated with the plurality of selected video reviews and the profile of the first customer.

Accordingly there is provided a method, a system, and a computer program as detailed in the claims that follow.

### BRIEF DESCRIPTION OF THE DRAWINGS

Reference will now be made, by way of example, to the accompanying drawings which show example embodiments of the present application, and in which:
FIG. 1 is a block diagram of an example e-commerce platform, in which examples described herein may be implemented;
FIG. 2 is an example homepage of an administrator, which may be accessed via the e-commerce platform of FIG. 1;
FIG. 3 is another block diagram of the e-commerce platform of FIG. 1, showing some details related to application development;
FIG. 4 shows an example data flow that may take place when a purchase is made using the e-commerce platform of FIG. 1;
FIG. 5 is another block diagram of the e-commerce platform of FIG. 1, showing some details related to review creation and presentation;
FIG. 6 is a block diagram illustrating example data structures that may be stored in the e-commerce platform of FIG. 1;
FIG. 7 is a block diagram illustrating an example implementation of the e-commerce platform of FIG. 1;
FIGS. 8A and 8B illustrate example affinity graphs that may be representative of data analysis performed by the e-commerce platform of FIG. 1;
FIG. 9 is a flowchart illustrating an example method for using affinity to prompt creation of a review;
FIGS. 10A-10D are schematic diagrams illustrating an example of how a reviewer may be prompted to create a review, using the method of FIG. 9;
FIGS. 11A-11F are example user interfaces that may be provided to a reviewer, using the method of FIG. 9;
FIG. 12 is a flowchart illustrating an example method for presenting reviewers to a customer, based on customized selection of reviews; and
FIGS. 13A and 13B are example user interfaces that may be provided to a customer, using the method of FIG. 12.

Similar reference numerals may have been used in different figures to denote similar components.

### DESCRIPTION OF EXAMPLE EMBODIMENTS

The present disclosure will be described in the context of an e-commerce platform, discussed below. However, it should be understood that this discussed is only for the purpose of illustration and is not intended to be limiting. Further, it should be understood that the present disclosure may be implemented in other contexts, and is not necessarily limited to implementation in an e-commerce platform.

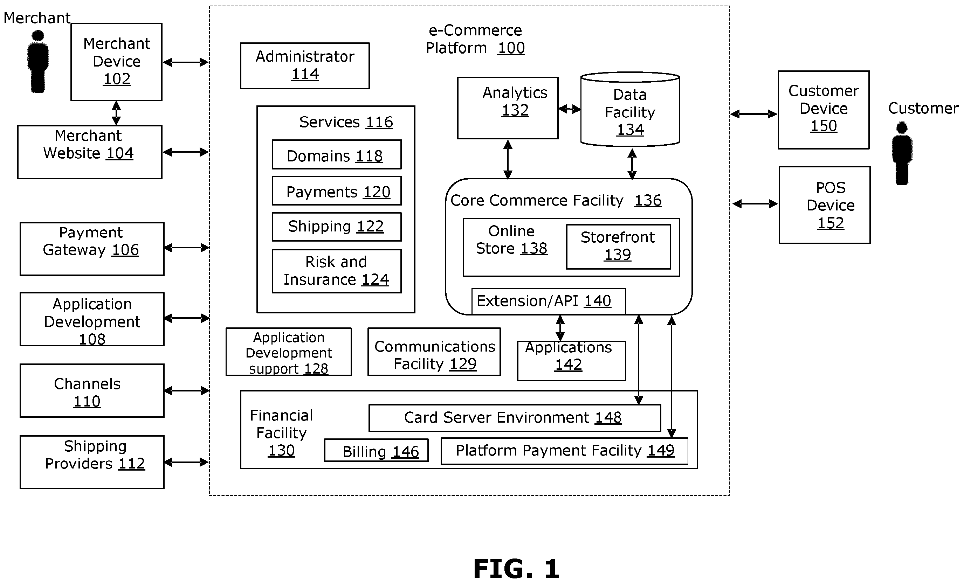

With reference to FIG. 1, an embodiment e-commerce platform 100 is depicted for providing merchant products and services to customers. While the disclosure throughout contemplates using the apparatus, system, and process disclosed to purchase products and services, for simplicity the description herein will refer to products or offerings. All references to products or offerings throughout this disclosure should also be understood to be references to products and/or services, including physical products, digital content, tickets, subscriptions, services to be provided, and the like.

While the disclosure throughout contemplates that a "merchant" and a "customer" may be more than individuals, for simplicity the description herein may generally refer to merchants and customers as such. All references to merchants and customers throughout this disclosure should also be understood to be references to groups of individuals, companies, corporations, computing entities, and the like, and may represent for-profit or not-for-profit exchange of products. Further, while the disclosure throughout refers to 'merchants' and 'customers', and describes their roles as such, the e-commerce platform 100 should be understood to more generally support users in an e-commerce environment, and all references to merchants and customers throughout this disclosure should also be understood to be references to users, such as where a user is a merchant-user (e.g., a seller, retailer, wholesaler, or provider of products), a customer-user (e.g., a buyer, purchase agent, or user of products), a perspective user (e.g., a user browsing and not yet committed to a purchase, a user evaluating the e-commerce platform 100 for potential use in marketing and selling products, and the like), a service provider user (e.g., a shipping provider 112, a financial provider, and the like), a company or corporate user (e.g., a company representative for purchase, sales, or use of products; an enterprise user; a customer relations or customer management agent, and the like), an information technology user, a computing entity user (e.g., a computing bot for purchase, sales, or use of products), and the like.

The e-commerce platform 100 may provide a centralized system for providing merchants with online resources for managing their business. Merchants may utilize the e-commerce platform 100 for managing commerce with customers, such as by implementing an e-commerce experience with customers through an online store 138, through channels 110, through point of sale (POS) devices 152 in physical locations (e.g., a physical storefront or other location such as through a kiosk, terminal, reader, printer, 3D printer, and the like), by managing their business through the e-commerce platform 100, by interacting with customers through a communications facility 129 of the e-commerce platform 100, or any combination thereof.

The online store 138 may represent a multitenant facility comprising a plurality of virtual storefronts 139. In various embodiments, merchants may manage one or more storefronts 139 in the online store 138, such as through a merchant device 102 (e.g., computer, laptop computer, mobile computing device, and the like), and offer products to customers through a number of different channels 110 (e.g., an online store 138; a physical storefront through a POS device 152; electronic marketplace, through an electronic buy button integrated into a website or social media channel such as on a social network, social media page, social media messaging system; and the like). A merchant may sell across channels 110 and then manage their sales through the e-commerce platform 100. A merchant may sell in their physical retail store, at pop ups, through wholesale, over the phone, and the like, and then manage their sales through the e-commerce platform 100. A merchant may employ all or any combination of these, such as maintaining a business through a physical storefront utilizing POS devices 152, maintaining a virtual storefront 139 through the online store 138, and utilizing the communications facility 129 to leverage customer interactions and analytics 132 to improve the probability of sales, for example.

In various embodiments, a customer may interact through a customer device 150 (e.g., computer, laptop computer, mobile computing device, and the like), a POS device 152 (e.g., retail device, a kiosk, an automated checkout system, and the like), or any other commerce interface device known in the art. The e-commerce platform 100 may enable merchants to reach customers through the online store 138, through POS devices 152 in physical locations (e.g., a merchant's storefront or elsewhere), to promote commerce with customers through dialog via electronic communication, and the like, providing a system for reaching customers and facilitating merchant services for the real or virtual pathways available for reaching and interacting with customers.

In various embodiments, and as described further herein, the e-commerce platform 100 may be implemented through a processing facility including a processor and a memory, the processing facility storing a set of instructions that, when executed, cause the e-commerce platform 100 to perform the e-commerce and support functions as described herein. The processing facility may be part of a server, client, network infrastructure, mobile computing platform, cloud computing platform, stationary computing platform, or other computing platform, and provide electronic connectivity and communications between and amongst the electronic components of the e-commerce platform 100, merchant devices 102, payment gateways 106, application development 108, channels 110, shipping providers 112, customer devices 150, POS devices 152, and the like. The e-commerce platform 100 may be implemented as a cloud computing service, a software as a service (SaaS), infrastructure as a service (IaaS), platform as a service (PaaS), desktop as a Service (DaaS), managed software as a service (MSaaS), mobile backend as a service (MBaaS), information technology management as a service (ITMaaS), and the like, such as in a software and delivery model in which software is licensed on a subscription basis and centrally hosted (e.g., accessed by users using a thin client via a web browser, accessed through by POS devices, and the like). In various embodiments, elements of the e-commerce platform 100 may be implemented to operate on various platforms and operating systems, such as iOS, Android, over the internet, and the like.

In various embodiments, storefronts 139 may be served by the e-commerce platform 100 to customers (e.g., via customer devices 150), where customers can browse and purchase the various products available (e.g., add them to a cart, purchase immediately through a buy-button, and the like). Storefronts 139 may be served to customers in a transparent fashion without customers necessarily being aware that it is being provided through the e-commerce platform 100 (rather than directly from the merchant). Merchants may use a merchant configurable domain name, a customizable HTML theme, and the like, to customize their storefront 139. Merchants may customize the look and feel of their website through a theme system, such as where merchants can select and change the look and feel of their storefront 139 by changing their theme while having the same underlying product and business data shown within the storefront's product hierarchy. Themes may be further customized through a theme editor, a design interface that enables users to customize their website's design with flexibility. Themes may also be customized using theme-specific settings that change aspects, such as specific colors, fonts, and pre-built layout schemes. The online store may implement a basic content management system for website content. Merchants may author blog posts or static pages and publish them to their storefront 139 and/or website 104, such as through blogs, articles, and the like, as well as configure navigation menus. Merchants may upload images (e.g., for products), video, content, data, and the like to the e-commerce platform 100, such as for storage by the system. In various embodiments, the e-commerce platform 100 may provide functions for resizing images, associating an image with a product, adding and associating text with an image, adding an image for a new product variant, protecting images, and the like.

As described herein, the e-commerce platform 100 may provide merchants with transactional facilities for products through a number of different channels 110, including the online store 138, over the telephone, as well as through physical POS devices 152 as described herein. The e-commerce platform 100 may provide business support services 116, an administrator component 114, and the like associated with running an on-line business, such as providing a domain service 118 associated with their online store, payments services 120 for facilitating transactions with a customer, shipping services 122 for providing customer shipping options for purchased products, risk and insurance services 124 associated with product protection and liability, merchant billing services 146, and the like. Services 116 may be provided via the e-commerce platform 100 or in association with external facilities, such as through a payment gateway 106 for payment processing, shipping providers 112 for expediting the shipment of products, and the like.

In various embodiments, the e-commerce platform 100 may provide for integrated shipping services 122 (e.g., through an e-commerce platform shipping facility or through a third-party shipping carrier), such as providing merchants with real-time updates, tracking, automatic rate calculation, bulk order preparation, label printing, and the like.

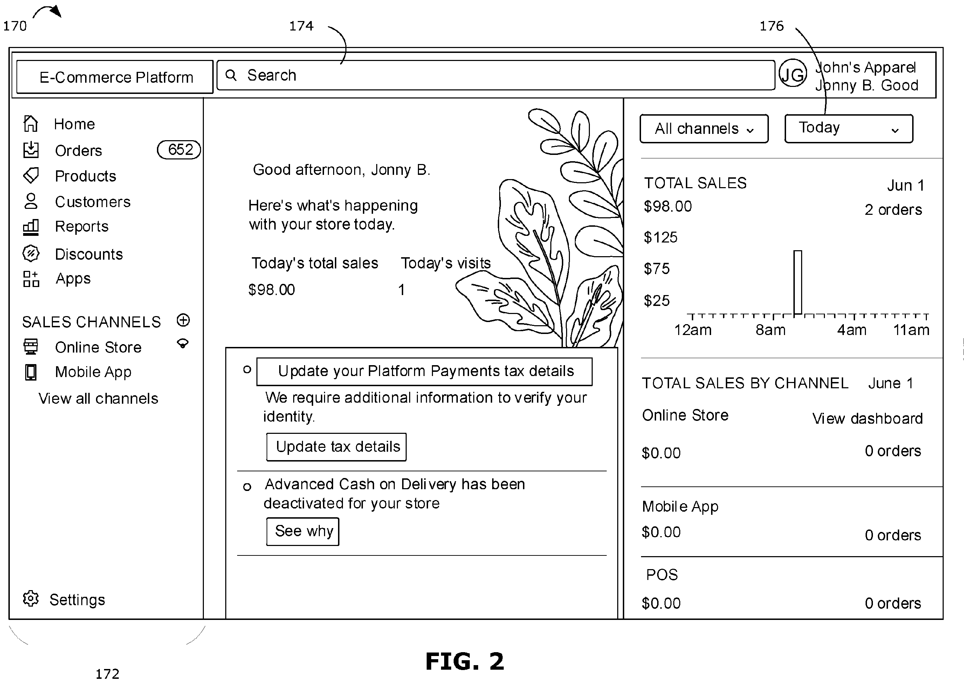

FIG. 2 depicts a non-limiting embodiment for a home page 170 of an administrator 114, which may show information about daily tasks, a store's recent activity, and the next steps a merchant can take to build their business. In various embodiments, a merchant may log in to administrator 114, such as from a browser or mobile device, and manage aspects of their storefront, such as viewing the storefront's recent activity, updating the storefront's catalog, managing orders, recent visits activity, total orders activity, and the like. In various embodiments, the merchant may be able to access the different sections of administrator 114 by using the sidebar 172, such as shown on FIG. 2. Sections of the administrator may include core aspects of a merchant's business, including orders, products, and customers; sales channels, including the online store, POS, and buy button; applications installed on the merchant's account; settings applied to a merchant's storefront 139 and account. A merchant may use a search bar 174 to find products, pages, or other information. Depending on the device the merchant is using, they may be enabled for different functionality through the administrator 114. For instance, if a merchant logs in to the administrator 114 from a browser, they may be able to manage all aspects of their storefront 139. If the merchant logs in from their mobile device, they may be able to view all or a subset of the aspects of their storefront 139, such as viewing the storefront's recent activity, updating the storefront's catalog, managing orders, and the like.

More detailed information about commerce and visitors to a merchant's storefront 139 may be viewed through acquisition reports or metrics, such as displaying a sales summary for the merchant's overall business, specific sales and engagement data for active sales channels, and the like. Reports may include, acquisition reports, behavior reports, customer reports, finance reports, marketing reports, sales reports, custom reports, and the like. The merchant may be able to view sales data for different channels 110 from different periods of time (e.g., days, weeks, months, and the like), such as by using drop-down menus 176. An overview dashboard may be provided for a merchant that wants a more detailed view of the store's sales and engagement data. An activity feed in the home metrics section may be provided to illustrate an overview of the activity on the merchant's account. For example, by clicking on a 'view all recent activity' dashboard button, the merchant may be able to see a longer feed of recent activity on their account. A home page may show notifications about the merchant's storefront 139, such as based on account status, growth, recent customer activity, and the like. Notifications may be provided to assist a merchant with navigating through a process, such as capturing a payment, marking an order as fulfilled, archiving an order that is complete, and the like.

Reference is made back to FIG. 1. The e-commerce platform may provide for a communications facility 129 and associated merchant interface for providing electronic communications and marketing, such as utilizing an electronic messaging aggregation facility (not shown) for collecting and analyzing communication interactions between merchants, customers, merchant devices 102, customer devices 150, POS devices 152, and the like, to aggregate and analyze the communications, such as for increasing the potential for providing a sale of a product, and the like. For instance, a customer may have a question related to a product, which may produce a dialog between the customer and the merchant (or automated processor-based agent representing the merchant), where the communications facility 129 analyzes the interaction and provides analysis to the merchant on how to improve the probability for a sale.

The e-commerce platform 100 may provide a financial facility 130 for secure financial transactions with customers, such as through a secure card server environment 148. The e-commerce platform 100 may store credit card information, such as in payment card industry data (PCI) environments (e.g., a card server), to reconcile financials, bill merchants, perform automated clearing house (ACH) transfers between an e-commerce platform 100 financial institution account and a merchant's back account (e.g., when using capital), and the like. These systems may have Sarbanes-Oxley Act (SOX) compliance and a high level of diligence required in their development and operation. The financial facility 130 may also provide merchants with financial support, such as through the lending of capital (e.g., lending funds, cash advances, and the like) and provision of insurance. In addition, the e-commerce platform 100 may provide for a set of marketing and partner services and control the relationship between the e-commerce platform 100 and partners. They also may connect and onboard new merchants with the e-commerce platform 100. These services may enable merchant growth by making it easier for merchants to work across the e-commerce platform 100. Through these services, merchants may be provided help facilities via the e-commerce platform 100.

In various embodiments, online store 138 may support a great number of independently administered storefronts 139 and process a large volume of transactional data on a daily basis for a variety of products. Transactional data may include customer contact information, billing information, shipping information, information on products purchased, information on services rendered, and any other information associated with business through the e-commerce platform 100. In various embodiments, the e-commerce platform 100 may store this data in a data facility 134. The transactional data may be processed to produce analytics 132, which in turn may be provided to merchants or third-party commerce entities, such as providing consumer trends, marketing and sales insights, recommendations for improving sales, evaluation of customer behaviors, marketing and sales modeling, trends in fraud, and the like, related to online commerce, and provided through dashboard interfaces, through reports, and the like. The e-commerce platform 100 may store information about business and merchant transactions, and the data facility 134 may have many ways of enhancing, contributing, refining, and extracting data, where over time the collected data may enable improvements to aspects of the e-commerce platform 100.

In various embodiments, the e-commerce platform 100 may be configured with a core commerce facility 136 for content management and task automation to enable support and services to the plurality of storefronts 139 (e.g., related to products, inventory, customers, orders, collaboration, suppliers, reports, financials, risk and fraud, and the like), but be extensible through applications 142 that enable greater flexibility and custom processes required for accommodating an ever-growing variety of merchant storefronts 139, POS devices 152, products, and services. For instance, the core commerce facility 136 may be configured for flexibility and scalability through portioning (e.g., sharding) of functions and data, such as by customer identifier, order identifier, storefront identifier, and the like. The core commerce facility 136 may accommodate store-specific business logic and a web administrator. The online store 138 may represent a channel, be embedded within the core commerce facility 136, provide a set of support and debug tools that support uses for merchants, and the like. The core commerce facility 136 may provide centralized management of critical data for storefronts 139.

The core commerce facility 136 includes base or "core" functions of the e-commerce platform 100, and as such, as described herein, not all functions supporting storefronts 139 may be appropriate for inclusion. For instance, functions for inclusion into the core commerce facility 136 may need to exceed a core functionality threshold through which it may be determined that the function is core to a commerce experience (e.g., common to a majority of storefront activity, such as across channels, administrator interfaces, merchant locations, industries, product types, and the like), is re-usable across storefronts (e.g., functions that can be re-used/modified across core functions), limited to the context of a single storefront at a time (e.g., implementing a storefront 'isolation principle', where code should not be able to interact with multiple storefronts at a time, ensuring that storefronts cannot access each other's data), provide a transactional workload, and the like. Maintaining control of what functions are implemented may enable the core commerce facility 136 to remain responsive, as many required features are either served directly by the core commerce facility 136 or enabled by its extension / application programming interface (API) 140 connection to applications 142. If care is not given to restricting functionality in the core commerce facility 136, responsiveness could be compromised, such as through infrastructure degradation through slow databases or non-critical backend failures, through catastrophic infrastructure failure such as with a data center going offline, through new code being deployed that takes longer to execute than expected, and the like. To prevent or mitigate these situations, the core commerce facility 136 may be configured to maintain responsiveness, such as through configuration that utilizes timeouts, queues, back-pressure to prevent degradation, and the like.

Although isolating storefront data is important to maintaining data privacy between storefronts 139 and merchants, there may be reasons for collecting and using cross-store data, such as for example, with an order risk assessment system or a platform payment facility, both of which require information from a majority of storefronts 139 to perform well. In various embodiments, rather than violating the isolation principle, it may be preferred to move these components out of the core commerce facility 136 and into their own infrastructure within the e-commerce platform 100. For example, the data facility 134 and analytics 132 may be located outside the core commerce facility 136.

In various embodiments, the e-commerce platform 100 may provide for a platform payment facility 149, which is another example of a component that utilizes data from the core commerce facility 138 but may be located outside so as to not violate the isolation principle. The platform payment facility 149 may allow customers interacting with storefronts 139 to have their payment information stored safely by the core commerce facility 136 such that they only have to enter it once. When a customer visits a different storefront 139, even if they've never been there before, the platform payment facility 149 may recall their information to enable a more rapid and correct check out. This may provide a cross-platform network effect, where the e-commerce platform 100 becomes more useful to its merchants as more merchants join, such as because there are more customers who checkout more often because of the ease of use with respect to customer purchases. To maximize the effect of this network, payment information for a given customer may be retrievable from a storefront's checkout, allowing information to be made available globally across storefronts 139. It would be difficult and error prone for each storefront 139 to be able to connect to any other storefront 139 to directly retrieve the payment information stored there. As a result, the platform payment facility 149 may be implemented external to the core commerce facility 136.

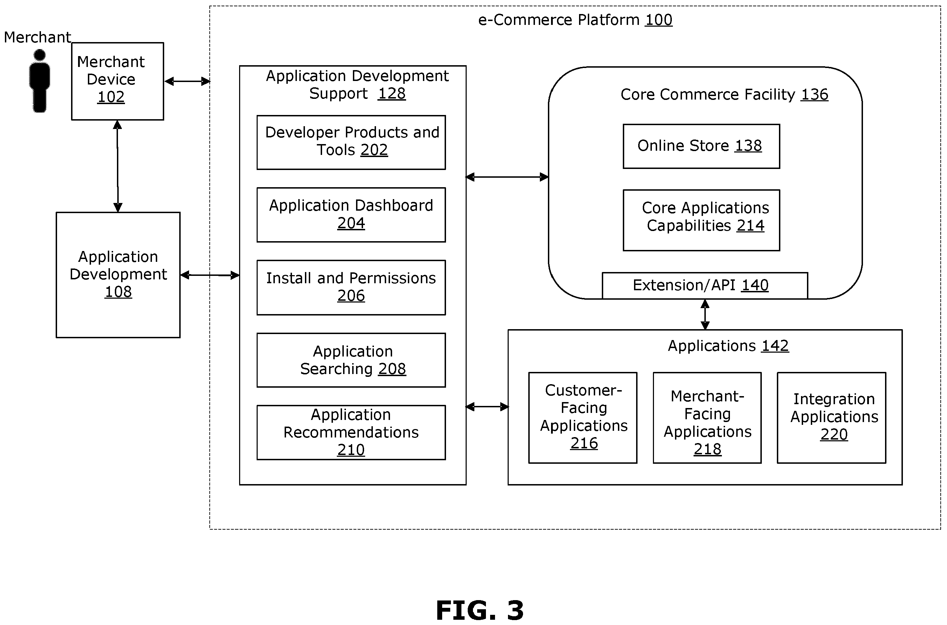

For those functions that are not included within the core commerce facility 138, applications 142 provide a way to add features to the e-commerce platform 100. Applications 142 may be able to access and modify data on a merchant's storefront 139, perform tasks through the administrator 114, create new flows for a merchant through a user interface (e.g., that is surfaced through extensions / API 140), and the like. Merchants may be enabled to discover and install applications 142 through application searching 208 and application recommendations 210 (see FIG. 3). In various embodiments, core products, core extension points, applications, and the administrator 114 may be developed to work together. For instance, application extension points may be built inside the administrator 114 so that core features may be extended by way of applications 142, which may deliver functionality to a merchant through the extension / API 140.

In various embodiments, applications 142 may deliver functionality to a merchant through the extension / API 140, such as where an application 142 is able to surface transaction data to a merchant (e.g., App: "Surface my app in mobile and web admin using the embedded app SDK"), and/or where the core commerce facility 136 is able to ask the application to perform work on demand (core: "App, give me a local tax calculation for this checkout").

Applications 142 may support storefronts 139 and channels 110, provide merchant support, integrate with other services, and the like. Where the core commerce facility 136 may provide the foundation of services to the storefront 139, the applications 142 may provide a way for merchants to satisfy specific and sometimes unique needs. Different merchants will have different needs, and so may benefit from different applications 142. Applications 142 may be better discovered through the e-commerce platform 100 through development of an application taxonomy (categories) that enable applications to be tagged according to a type of function it performs for a merchant; through application data services that support searching, ranking, and recommendation models; through application discovery interfaces such as an application store, home information cards, an application settings page; and the like.

Applications 142 may be connected to the core commerce facility 136 through an extension / API layer 140, such as utilizing APIs to expose the functionality and data available through and within the core commerce facility 136 to the functionality of applications (e.g., through REST, GraphQL, and the like). For instance, the e-commerce platform 100 may provide API interfaces to merchant and partner-facing products and services, such as including application extensions, process flow services, developer-facing resources, and the like. With customers more frequently using mobile devices for shopping, applications 142 related to mobile use may benefit from more extensive use of APIs to support the related growing commerce traffic. The flexibility offered through use of applications and APIs (e.g., as offered for application development) enable the e-commerce platform 100 to better accommodate new and unique needs of merchants (and internal developers through internal APIs) without requiring constant change to the core commerce facility 136, thus providing merchants what they need when they need it. For instance, shipping services 122 may be integrated with the core commerce facility 136 through a shipping or carrier service API, thus enabling the e-commerce platform 100 to provide shipping service functionality without directly impacting code running in the core commerce facility 136.

Many merchant problems may be solved by letting partners improve and extend merchant workflows through application development, such as problems associated with back-office operations (merchant-facing applications) and in the storefront (customer-facing applications). As a part of doing business, many merchants will use mobile and web related applications on a daily basis for back-office tasks (e.g., merchandising, inventory, discounts, fulfillment, and the like) and storefront tasks (e.g., applications related to their online shop, for flash-sales, new product offerings, and the like), where applications 142, through extension / API 140, help make products easy to view and purchase in a fast growing marketplace. In various embodiments, partners, application developers, internal applications facilities, and the like, may be provided with a software development kit (SDK), such as through creating a frame within the administrator 114 that sandboxes an application interface. In various embodiments, the administrator 114 may not have control over nor be aware of what happens within the frame. The SDK may be used in conjunction with a user interface kit to produce interfaces that mimic the look and feel of the e-commerce platform 100, such as acting as an extension of the core commerce facility 136.

Applications 142 that utilize APIs may pull data on demand, but often they also need to have data pushed when updates occur. Update events may be implemented in a subscription model, such as for example, customer creation, product changes, or order cancelation. Update events may provide merchants with needed updates with respect to a changed state of the core commerce facility 136, such as for synchronizing a local database, notifying an external integration partner, and the like. Update events may enable this functionality without having to poll the core commerce facility 136 all the time to check for updates, such as through an update event subscription. In various embodiments, when a change related to an update event subscription occurs, the core commerce facility 136 may post a request, such as to a predefined callback URL. The body of this request may contain a new state of the object and a description of the action or event. Update event subscriptions may be created manually, in the administrator facility 114, or automatically (e.g., via the API). In various embodiments, update events may be queued and processed asynchronously from a state change that triggered them, which may produce an update event notification that is not distributed in real-time.

Reference is made to FIG. 3, which is another depiction of the e-commerce platform 100. FIG. 3 omits some details that have been described with reference to FIG. 1, and shows further details discussed below. In various embodiments, the e-commerce platform 100 may provide application development support 128. Application development support 128 may include developer products and tools 202 to aid in the development of applications, an application dashboard 204 (e.g., to provide developers with a development interface, to administrators for management of applications, to merchants for customization of applications, and the like), facilities for installing and providing permissions 206 with respect to providing access to an application 142 (e.g., for public access, such as where criteria must be met before being installed, or for private use by a merchant), application searching 208 to make it easy for a merchant to search for applications 142 that satisfy a need for their storefront 139, application recommendations 210 to provide merchants with suggestions on how they can improve the user experience through their storefront 139, a description of core application capabilities 214 within the core commerce facility 136, and the like. These support facilities may be utilized by application development 108 performed by any entity, including the merchant developing their own application 142, a third-party developer developing an application 142 (e.g., contracted by a merchant, developed on their own to offer to the public, contracted for use in association with the e-commerce platform 100, and the like), or an application being developed by internal personal resources associated with the e-commerce platform 100. In various embodiments, applications 142 may be assigned an application identifier (ID), such as for linking to an application (e.g., through an API), searching for an application, making application recommendations, and the like.

The core commerce facility 136 may include base functions of the e-commerce platform 100 and expose these functions through APIs to applications 142. The APIs may enable different types of applications built through application development 108. Applications 142 may be capable of satisfying a great variety of needs for merchants but may be grouped roughly into three categories: customer-facing applications 216, merchant-facing applications 218, or integration applications 220. Customer-facing applications 216 may include storefront 139 or channels 110 that are places where merchants can list products and have them purchased (e.g., the online store, applications for flash sales (e.g., merchant products or from opportunistic sales opportunities from third-party sources), a mobile store application, a social media channel, an application for providing wholesale purchasing, and the like). Merchant-facing applications 218 may include applications that allow the merchant to administer their storefront 139 (e.g., through applications related to the web or website or to mobile devices), run their business (e.g., through applications related to POS devices 152), to grow their business (e.g., through applications related to shipping (e.g., drop shipping), use of automated agents, use of process flow development and improvements), and the like. Integration applications 220 may include applications that provide useful integrations that participate in the running of a business, such as shipping providers 112 and payment gateways.

In various embodiments, an application developer may use an application proxy to fetch data from an outside location and display it on the page of an online storefront 139. Content on these proxy pages may be dynamic, capable of being updated, and the like. Application proxies may be useful for displaying image galleries, statistics, custom forms, and other kinds of dynamic content. The core-application structure of the e-commerce platform 100 may allow for an increasing number of merchant experiences to be built in applications 142 so that the core commerce facility 136 can remain focused on the more commonly utilized business logic of commerce.

The e-commerce platform 100 provides an online shopping experience through a curated system architecture that enables merchants to connect with customers in a flexible and transparent manner. A typical customer experience may be better understood through an embodiment example purchase workflow, where the customer browses the merchant's products on a channel 110, adds what they intend to buy to their cart, proceeds to checkout, and pays for the content of their cart resulting in the creation of an order for the merchant. The merchant may then view and fulfill (or cancel) the order. The product is then delivered to the customer. If the customer is not satisfied, they might return the products to the merchant.

In an example embodiment, a customer may browse a merchant's products on a channel 110. A channel 110 is a place where customers can view and buy products. In various embodiments, channels 110 may be modeled as applications 142 (a possible exception being the online store 138, which is integrated within the core commence facility 136). A merchandising component may allow merchants to describe what they want to sell and where they sell it. The association between a product and a channel may be modeled as a product publication and accessed by channel applications, such as via a product listing API. A product may have many options, like size and color, and many variants that expand the available options into specific combinations of all the options, like the variant that is extra-small and green, or the variant that is size large and blue. Products may have at least one variant (e.g., a "default variant" is created for a product without any options). To facilitate browsing and management, products may be grouped into collections, provided product identifiers (e.g., stock keeping unit (SKU)) and the like. Collections of products may be built by either manually categorizing products into one (e.g., a custom collection), by building rulesets for automatic classification (e.g., a smart collection), and the like. Products may be viewed as 2D images, 3D images, rotating view images, through a virtual or augmented reality interface, and the like.

In various embodiments, the customer may add what they intend to buy to their cart (in an alternate embodiment, a product may be purchased directly, such as through a buy button as described herein). Customers may add product variants to their shopping cart. The shopping cart model may be channel specific. The online store 138 cart may be composed of multiple cart line items, where each cart line item tracks the quantity for a product variant. Merchants may use cart scripts to offer special promotions to customers based on the content of their cart. Since adding a product to a cart does not imply any commitment from the customer or the merchant, and the expected lifespan of a cart may be in the order of minutes (not days), carts may be persisted to an ephemeral data store.

The customer then proceeds to checkout. A checkout component may implement a web checkout as a customer-facing order creation process. A checkout API may be provided as a computer-facing order creation process used by some channel applications to create orders on behalf of customers (e.g., for point of sale). Checkouts may be created from a cart and record a customer's information such as email address, billing, and shipping details. On checkout, the merchant commits to pricing. If the customer inputs their contact information but does not proceed to payment, the e-commerce platform 100 may provide an opportunity to re-engage the customer (e.g., in an abandoned checkout feature). For those reasons, checkouts can have much longer lifespans than carts (hours or even days) and are therefore persisted. Checkouts may calculate taxes and shipping costs based on the customer's shipping address. Checkout may delegate the calculation of taxes to a tax component and the calculation of shipping costs to a delivery component. A pricing component may enable merchants to create discount codes (e.g., "secret" strings that when entered on the checkout apply new prices to the items in the checkout). Discounts may be used by merchants to attract customers and assess the performance of marketing campaigns. Discounts and other custom price systems may be implemented on top of the same platform piece, such as through price rules (e.g., a set of prerequisites that when met imply a set of entitlements). For instance, prerequisites may be items such as "the order subtotal is greater than $100" or "the shipping cost is under $10", and entitlements may be items such as "a 20% discount on the whole order" or "$10 off products X, Y, and Z".

Customers then pay for the content of their cart resulting in the creation of an order for the merchant. Channels 110 may use the core commerce facility 136 to move money, currency or a store of value (such as dollars or a cryptocurrency) to and from customers and merchants. Communication with the various payment providers (e.g., online payment systems, mobile payment systems, digital wallet, credit card gateways, and the like) may be implemented within a payment processing component. The actual interactions with the payment gateways 106 may be provided through the card server environment 148. In various embodiments, the payment gateway 106 may accept international payment, such as integrating with leading international credit card processors. The card server environment 148 may include a card server application, card sink, hosted fields, and the like. This environment may act as the secure gatekeeper of the sensitive credit card information.

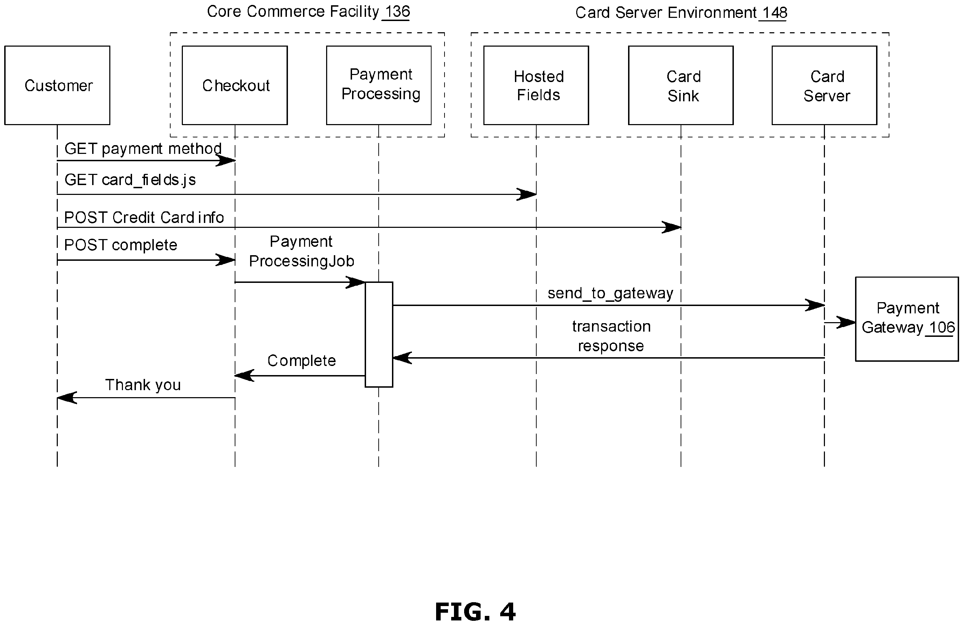

FIG. 4 presents, in a non-limiting example, a simplified sequence diagram of the interactions between the core commerce facility 136 and the card server environment 148 during payment processing of a credit, prepaid, gift or other card on a Web Checkout.

In various embodiments, most of the process may be orchestrated by a payment processing job. The core commerce facility 103 may support many other payment methods, such as through an offsite payment gateway 106 (e.g., where the customer is redirected to another website), manually (e.g., cash), online payment methods (e.g., online payment systems, mobile payment systems, digital wallet, credit card gateways, and the like), gift cards, and the like. At the end of the checkout process, an order is created. An order is a contract of sale between the merchant and the customer where the merchant agrees to provide the goods and services listed on the orders (e.g., order line items, shipping line items, and the like) and the customer agrees to provide payment (including taxes). This process may be modeled in a sales component. Channels 110 that do not rely on core commerce facility checkouts may use an order API to create orders. Once an order is created, an order confirmation notification may be sent to the customer and an order placed notification sent to the merchant via a notifications component. Inventory may be reserved when a payment processing job starts to avoid over-selling (e.g., merchants may control this behavior from the inventory policy of each variant). Inventory reservation may have a short time span (minutes) and may need to be very fast and scalable to support flash sales (e.g., a discount or promotion offered for a short time, such as targeting impulse buying). The reservation is released if the payment fails. When the payment succeeds, and an order is created, the reservation is converted into a long-term inventory commitment allocated to a specific location. An inventory component may record where variants are stocked, and tracks quantities for variants that have inventory tracking enabled. It may decouple product variants (a customer facing concept representing the template of a product listing) from inventory items (a merchant facing concept that represent an item whose quantity and location is managed). An inventory level component may keep track of quantities that are available for sale, committed to an order or incoming from an inventory transfer component (e.g., from a vendor). The merchant may then view and fulfill (or cancel) the order.

An order assessment component may implement a business process merchants use to ensure orders are suitable for fulfillment before actually fulfilling them. Orders may be fraudulent, require verification (e.g., ID checking), have a payment method which requires the merchant to wait to make sure they will receive their funds, and the like. Risks and recommendations may be persisted in an order risk model. Order risks may be generated from a fraud detection tool, submitted by a third-party through an order risk API, and the like. Before proceeding to fulfillment, the merchant may need to capture the payment information (e.g., credit card information) or wait to receive it (e.g., via a bank transfer, check, and the like) and mark the order as paid. The merchant may now prepare the products for delivery. In various embodiments, this business process may be implemented by a fulfillment component. The fulfillment component may group the line items of the order into a logical fulfillment unit of work based on an inventory location and fulfillment service. The merchant may assess the order, adjust the unit of work, and trigger the relevant fulfillment services, such as through a manual fulfillment service (e.g., at merchant managed locations) used when the merchant picks and packs the products in a box, purchase a shipping label and input its tracking number, or just mark the item as fulfilled. A custom fulfillment service may send an email (e.g., a location that does not provide an API connection). An API fulfillment service may trigger a third party, where the third-party application creates a fulfillment record. A legacy fulfillment service may trigger a custom API call from the core commerce facility 136 to a third party (e.g., fulfillment by Amazon). A gift card fulfillment service may provision (e.g., generating a number) and activate a gift card. Merchants may use an order printer application to print packing slips. The fulfillment process may be executed when the items are packed in the box and ready for shipping, shipped, tracked, delivered, verified as received by the customer, and the like.

If the customer is not satisfied, they may be able to return the product(s) to the merchant. The business process merchants may go through to "un-sell" an item may be implemented by a returns component. Returns may consist of a variety of different actions, such as a restock, where the product that was sold actually comes back into the business and is sellable again; a refund, where the money that was collected from the customer is partially or fully returned; an accounting adjustment noting how much money was refunded (e.g., including if there was any restocking fees, or goods that were not returned and remain in the customer's hands); and the like. A return may represent a change to the contract of sale (e.g., the order), and where the e-commerce platform 100 may make the merchant aware of compliance issues with respect to legal obligations (e.g., with respect to taxes). In various embodiments, the e-commerce platform 100 may enable merchants to keep track of changes to the contract of sales over time, such as implemented through a sales model component (e.g., an append-only date-based ledger that records sale-related events that happened to an item).

After the fulfillment process has been completed and the customer has received the purchased offering, the customer may be invited (e.g., via a notification pushed by the e-commerce platform 100) to provide a review for the purchased offering. The option to provide a review may only be available to a customer after the purchased offering has been verified as received. In the case where the offering is a service, the option to provide a review may only be available to a customer after the service has been completed. In this way, only customers who have made a verified purchase of an offering may be able to create reviews for the offering.

The e-commerce platform 100 may provide a user interface, to be presented via the customer device 150, to enable the customer to provide a review. The user interface may provide various options for creating the review including, for example, an option for a simple quantitative review (e.g., a star rating or a number from 1-5), an option for a text review, an option for an audio review and/or an option for a video review. A customer who provides a review for a purchased offering may be referred to herein as a "reviewer". It should be understood that any customer of a given offering may be also a reviewer of that offering, and any reviewer for a given offering may also be a customer of a different offering. Further, a reviewer may not necessarily be an individual (e.g., a company that purchases an offering may be a reviewer), however for simplicity the present disclosure will refer to reviewers as individuals.

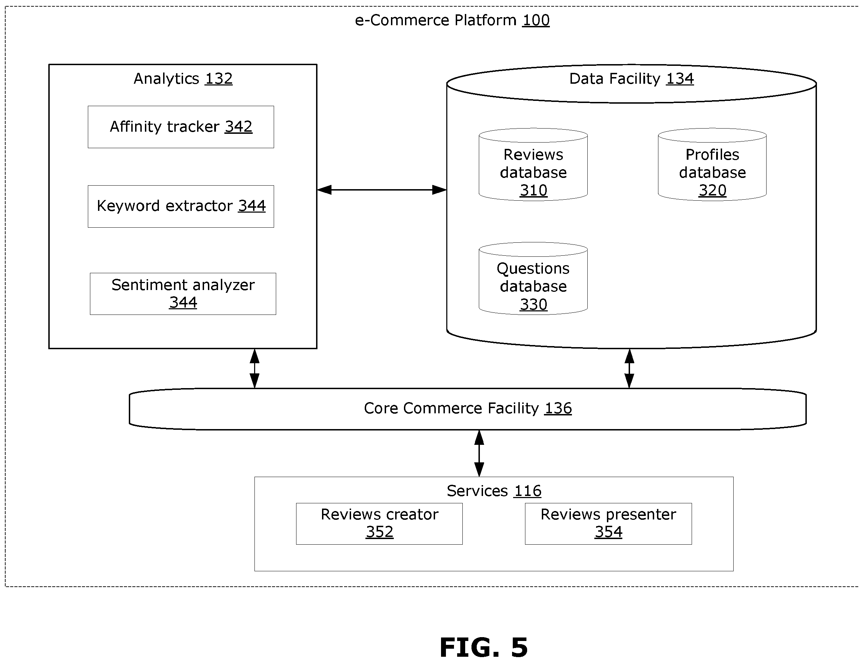

Reference will now be made to FIG. 5. FIG. 5 is another depiction of the e-commerce platform 100 that omits some details that have been described with reference to FIG. 1, and shows further details discussed below. In particular, FIG. 5 illustrates some details of the data facility 134, the analytics facility 132 and the services 116 that are relevant to reviews.

In this example, the data facility 134 includes a reviews database 310 containing review data, a profiles database 320 containing customer profile data, and a questions database 330 containing questions about merchant offerings. Further details of the databases 310, 320, 330 will be discussed further below.

The analytics facility 132 in this example includes an affinity tracker 342, a keyword extractor 344 and a sentiment analyzer 346. Each of the affinity tracker 342, keyword extractor 344 and sentiment analyzer 346 may be implemented as separate sub-modules of the analytics facility 132. In some examples, the functions of one or more of the affinity tracker 342, keyword extractor 344 and sentiment analyzer 346 may be provided using a single submodule (instead of three separate sub-modules) or implemented as general functions of the analytics facility 132. As will be discussed further below, one or more of the affinity tracker 342, keyword extractor 344 and sentiment analyzer 346 may be implemented using a machine-learning system.

The e-commerce platform 100 in this example provides services 116 including a reviews creation engine or creator 352 and a reviews presentation engine or presenter 354. The reviews creator 352 provides tools for a reviewer to create a review for a merchant offering. The reviews presenter 354 serves to select one or more reviews to be presented to a customer. Each of the reviews creator 352 and reviews presenter 354 may use information stored in the data facility 134 and/or information generated by the analytics facility 132 to perform the relevant operations, as discussed further below.

It should be noted that the data facility 134, analytics facility 132, core commerce facility 136 and services 116 may be implemented in separate hardware or software components, on a common hardware component or server or configured as a common (integrated) service or engine in the e-commerce platform 100.

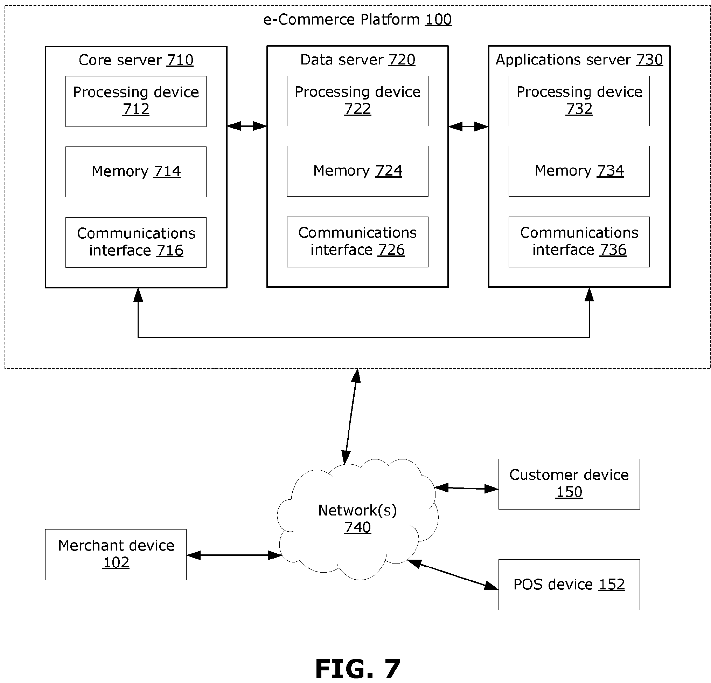

FIG. 7 is a block diagram of an example hardware configuration of the e-commerce platform 100. In this example, the e-commerce platform 100 includes a core server 710, a data server 720 and an applications server 730, which are each in communication with each other (e.g., via wired connections and/or via wireless intranet connections). Each of the servers 710, 720, 730 include a respective processing device 712, 722, 732 (each of which may be, for example, a microprocessor, graphical processing unit, digital signal processor or other computational element), a respective memory 714, 724, 734 (each of which may be, for example, random access memory (RAM), read only memory (ROM), hard disk, optical disc, subscriber identity module (SIM) card, memory stick, secure digital (SD) memory card, and the like, and may include tangible or transient memory), and a respective communications interface 716, 726, 736 (each of which may include transmitter, receiver and/or transceiver for wired and/or wireless communications). The core server 710 may store instructions and perform operations relevant to core capabilities of the e-commerce platform, such as providing the administrator 114, analytics 132, core commerce facility 136, services 116 and/or financial facility 130, among others. The data server 720 may be used to implement the data facility 134, including the reviews database 310, the profiles database 320 and the questions database 330, among others. The applications server 730 may store instructions and perform operations relevant to the applications 142, such as storing instructions and data for the applications 142 and for implementing application development support 128.

Merchants and customers, using respective devices 102, 150, 152 may access the e-commerce platform 100 via one or more networks 740 (e.g., wired and/or wireless networks, including a virtual private network (VPN), the Internet, and the like).

Although FIG. 7 illustrates an example hardware implementation of the e-commerce platform 100, it should be understood that other implementations may be possible. For example, there may be greater or fewer numbers of servers, the e-commerce platform 100 may be implemented in a distributed manner, or at least some of the memories 714, 724, 734 may be replaced with external storage or cloud-based storage, among other possible modifications.

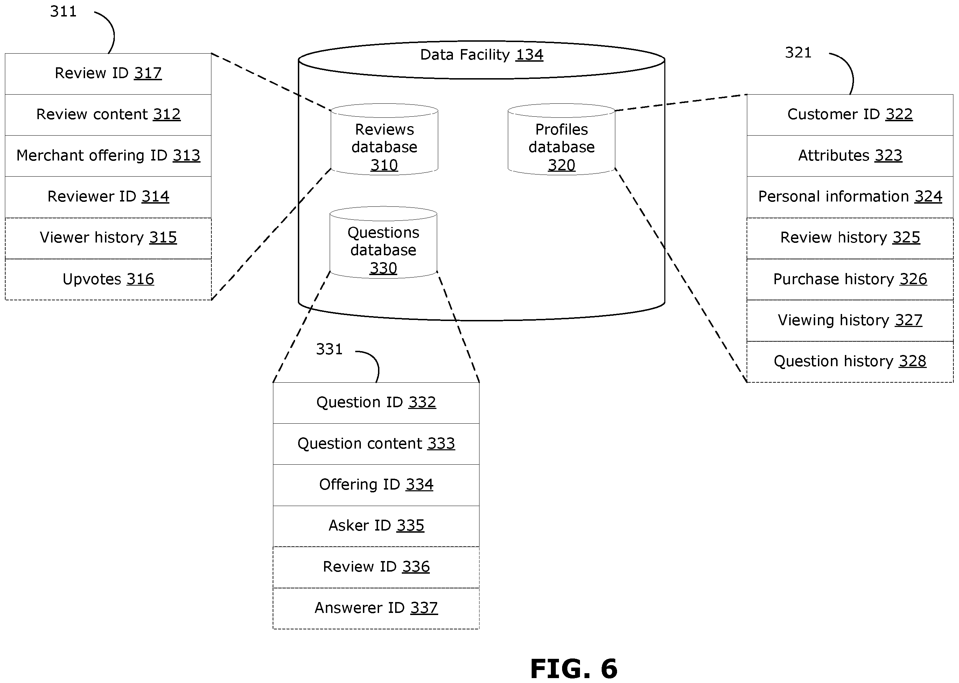

Reference is made back to FIGS. 5 and 6. As mentioned above, after a purchase of a merchant offering by a customer has been verified, the customer may be provided one or more options for creating a review for that offering. The customer who creates a review for a merchant offering is also referred to as a reviewer. The reviewer may create and submit the review using a user interface provided by the e-commerce platform 100. The submitted review is received by the e-commerce platform.

The review creator 352 may provide software tools for a reviewer to create the review and submit the review to the e-commerce platform 100. The review creator 352 may provide tools for creating a review in various formats, such as text format, audio format or video format. The review creator 352 may also provide tools for submitting a simple quantitative review (e.g., a star rating).

In some examples, the review creator 352 may provide a prompt to a reviewer to tailor the creation of a new review. For example, the review creator 352 may query the questions database 330 to generate a prompt to a reviewer to create a new review related to a particular question. The review creator 352 may further customize which question is prompted to which reviewer, for example based on affinity as discussed further below.

After the review is submitted, optionally the review may be assessed by the e-commerce platform 100 for approval. For example, the e-commerce platform 100 may include a moderator facility (not shown) which may assess the review for appropriate language, content, relevance, and the like. The moderator facility may be implemented using any suitable approach, including machine-learning algorithms, rules-based algorithm, human-assisted assessment or combinations thereof. The submitted review may also be assessed for quality (e.g., video quality, audio quality, encoding rate, bitrate, aspect ratios, etc. for video reviews; grammar, language used, formatting, etc. for text reviews). Such quality assessment may affect whether the submitted review is approved to be stored in the reviews database 310, or whether the submitted review would be prioritized to be presented to a customer (e.g., higher quality reviews may be ranked higher when multiple reviews are presented to a customer). Such quality assessment may also provide contextual information, such as the equipment used to create a video review. The review (after approval if applicable) may be stored in the reviews database 310. The information from the assessment may be stored with the review as metadata.

The reviews presenter 354 may be used to select and format one or more reviews (e.g., from the reviews database 310) to be presented to a customer. The reviews presenter 354 may, for example, retrieve reviews from the reviews database 310 using indices or identifiers to reference each review. A fast retrieval technique may be used, for example by prefetching selected reviews from the reviews database 310 into a temporary storage (e.g., a cache memory) from which the selected reviews can be presented when desired. Various techniques may be used by the reviews presenter 354 to enable retrieval of reviews by reference identifiers and to enable efficient presentation of reviews to a customer.

The reviews presenter 354 may also present the selected reviews to the customer as a single set of reviews (also referred to as a review set). A review set may include reviews in different formats, or reviews of the same format. For example, a review set of text reviews may be provided as a list of text reviews. Or a review set may include text reviews as well a video reviews within the same list.

In some examples, the review set may be provided in a manner that enables the customer to perceive the review set as a single review. For example, the reviews presenter 354 may format separate text reviews into a single block of text. In another example, the reviews presenter 354 may "stitch" separate video (or audio) reviews for presentation, as a seamless or continuous stream such that when transmitted and displayed or otherwise output on a customer device, the customer perceives the review set as a single video (or audio) review.

The reviews presenter 354 may perform on-the-fly processing such that the individual reviews in the review set are more seamlessly integrated into a perceived stream, without the reviews presenter 354 actually merging the separate reviews into a new larger reviewer. In the present disclosure, a seamless video (or audio) review set may be provided by playback of two or more stored video (or audio) reviews sequentially, such that the review set appears to be a seamless or continuous (e.g., non-interrupted) video (or audio) review stream. Various video processing techniques (e.g., audio balancing, fading in/out, etc.) may be used to transition the end of one video review with the start of the next sequential review, to provide a seamless or continuous viewing experience. Similarly, various audio processing techniques (e.g., audio fade in/out) may be used to transition the end of one audio review with the start of the next sequential audio review, to provide a seamless or continuous audio experience. The reviews presenter 354 may use any suitable techniques to present together multiple selected video (or audio) reviews in a seamless or continuous manner.

Notably, where a series of videos reviews are presented to a user by way of presentation of multiple separate video files / streams, overhead is incurred in the delivery and/or presentation of each video. For example, where a series of different videos are streamed in sequence, it may be necessary to delay the start of the presentation of each video briefly to allow buffering of frames to allow for compensation of jitter / latency in transmission of the video steam. This can lead to a delay in presentation and an interruption in the seamlessness of the presentation of the video series. This could, for example, be the case where multiple video reviews are presented as separate video files or streams. Moreover, additionally or alternatively, delivery and/or processing overhead may be incurred for each video of such a series of multiple different video files presented in sequence. By contrast, by forming a single video stream encompassing multiple video reviews in a seamless manner (e.g., as a single video file or stream) for presentation to a user, some or all or such overhead of presenting those different video reviews may be lessened or eliminated. Conveniently, in this way, the efficiency of the use of computing and/or network resources in presenting different video reviews may be improved.

In some examples, the selection of reviews by the reviews presenter 354 may be customized to the customer, as discussed further below.

FIG. 6 illustrates an example data structure for stored review data 311 in the reviews database 310. The review data 311 in this example includes a review identifier (ID) 317 (e.g., a code or other reference identifying the unique review data 311 in the reviews database 310); review content 312 (e.g., the text, audio, video, etc. created by the reviewer describing the reviewed offering); merchant offering ID 313 (e.g., a code or other reference identifying the offering that was reviewed); reviewer ID 314 (e.g., a code or other reference identifying the customer (e.g., by reference to the customer's profile) associated with the review data 311); optionally a viewer history 315 (e.g., IDs of customers who have viewed the review content 312); and optionally upvotes 316 (e.g., a record of how many customers have indicated approval of the review content 312).

The review content 312 may be any suitable format, appropriate to the mode of input that was used to create the review content 312. For example, the review content 312 may be a text file, an audio file, a video file, a quantitative indicator, combinations thereof, and the like. The merchant offering ID 313 and the reviewer ID 314 may be automatically (e.g., by the e-commerce platform 100) associated and stored with the review data 311 when the review is submitted.

When the review data 311 is initially created and stored in the e-commerce platform 100, there may not be any viewer history 315 or upvotes 316 associated with the review data 311. Each time the review is viewed by a customer, information about that customer (e.g., the profile ID associated with that customer) may be added to the review data 311 as part of the viewer history 315. Similarly, each time the review gains an approval by a customer, a count of upvotes 316 may be increased for the review data 311.

Other data (e.g., quality assessment data) may be included in the review data 311. Such data may be considered metadata for the review, to provide information about the contents of the review. The review data 311 may provide information that may be used (e.g., by the analytic facility 132 and/or the reviews presenter 354) to analyze, search for and/or select a review from the reviews database 310. Review data 311 stored in the reviews database 310 may be retrieved by referencing the relevant review ID 317, for example.

As will be discussed further below, a reviewer may be matched with a prospective customer based on matched attribute(s). In the present disclosure, the term "attribute" should be understood to refer to characteristics of the customer (or reviewer) or of a cohort, group or category the customer may be associated with, such as age, height, geographical location, marital status, gender, skin type, body shape, income, and the like. Such attributes may be explicitly identified by the customer (e.g., inputted in a profile) and/or may be implicitly determined based on the customer's behavior (e.g., purchase history, viewing history, etc.). In particular, it should be understood that an attribute may not be simply the customer's purchase history or viewing history, but rather the characteristics of the customer him/herself (which may be inferred from the purchase history or viewing history). In some examples, a customer's profile may include attributes (e.g., home address) without including any historical information. Conversely, in some examples a customer's profile may include historical information (e.g., a past purchase) without including any attributes.

FIG. 6 illustrates an example data structure for a stored profile 321 in the profiles database 320. In this example, the profile 321 includes a customer ID 322 (e.g., a code or other reference to uniquely identify the customer within the e-commerce platform 100); attributes 323 (e.g., characteristics of the customer (or customer cohort), such as geographical location, size, skin type, gender, height, weight, and the like); personal information 324 (e.g., sensitive information such as home address, full legal name, income, and the like); optionally review history 325 (e.g., list of review IDs identifying reviews created by the customer, if any); optionally purchase history 326 (e.g., identification of offerings purchased by the customer, if any); optionally viewing history 327 (e.g., identification of any reviews that have been viewed by the customer); and optionally question history 328 (e.g., identification of any questions that have been submitted by the customer). Other information may be stored in the profile 321, such as search history, etc.

Every customer who makes a purchase through the e-commerce platform 100 may have an associated profile 321 stored in the profiles database 320. In some examples, a profile 321 may be created when a customer initiates a purchase for the first time on the e-commerce platform 100, or when a customer logs into the e-commerce platform 100 for the first time. It should be noted that, because a reviewer is also a customer, each reviewer is associated with a profile 321.

The profile 321 may include information explicitly provided by the customer (e.g., personal information 324 such as full legal name and home address) as well as information that can be deduced or estimated (e.g., using the analytics facility 132) from the personal information 324, the review history 325, the purchase history 326, the viewing history 327 and/or the question history 328. For example, from the explicitly provided home address (in the personal information 324), the general geographical region of the customer (e.g., rural or urban, metropolitan region, etc.) may be deduced or estimated. Some implicit information may be deduced by recognizing (e.g., using statistical analysis and/or machine-learning based techniques implemented by the analytics facility 132 and/or using human analysis) patterns in the customer's purchase history 326. For example, from the purchase history 326 and/or viewing history 327, the customer's purchase preferences (e.g., preferred color, clothing size, shoe size, etc.) may be deduced or estimated. Various other such information, such as marital status, family size, number of children, etc. may also be deduced or estimated. By tracking the customer's review history 325, purchase history 326, viewing history 327 and/or question history 328 over time, implicit information may be deduced with greater detail. Various different techniques may be used to extract such implicit information, as known in the art, the details of which are not discussed herein.

The information in the profile 321 may be periodically or intermittently updated, depending on customer activity on the e-commerce platform 100. For example, the review history 325, purchase history 326, viewing history 327 and/or question history 328 may be updated as the customer, respectively, creates reviews, makes purchases, views reviews or listings, or submits questions. The analytics facility 132 may regularly or intermittently analyze the review history 325, the purchase history 326, the viewing history 327 and/or the question history 328 in order to update the attributes 323 for that customer. In some examples, each attribute 323 in the profile 321 may be labeled or otherwise identified as being relevant to one or more specific categories of offerings. For example, a height attribute may be relevant to the clothing category, but may be irrelevant to the edibles category.

As will be discussed further below, a prospective customer may be provided an option to submit a question about a merchant offering. FIG. 6 illustrates an example data structure for stored question data 331 in the questions database 330. In this example, the question data 331 includes a question ID 332 (e.g., a code or other reference identifying the unique question data 331 in the questions database 310); question content 333 (e.g., the text, audio, video, etc. containing the asked question); an offering ID 334 (e.g., a code or other reference identifying the offering that pertains to the question); an asker ID 335 (e.g., a code or other reference identifying the customer (e.g., by reference to the customer's profile) who submitted the question); optionally a review ID 336 (e.g., a code or other reference identifying any review(s) (e.g., by reference to the review ID) created to answer the question; and optionally an answerer ID 337 (e.g., a code of other reference identifying the reviewer (e.g., by reference to the reviewer's profile) who created a respective review to answer the question).

Although the present disclosure describes customer-submitted questions, it should be understood that the questions database 330 may also contain question data 331 for questions that are not submitted by customers. For example, the e-commerce platform 100 may store question data 331 that may be considered generic for categories of merchant offerings. In the case of such generic question data 331, the offering ID 334 may instead be replaced by information about the offering category associated with the question data 331. Generic question data 331 may, for example, pertain to questions that are common for a given category of merchant offering (e.g., "does this need to be dry-cleaned?" may be considered a generic question for the offering category "dresses"). Generic question data 331 may, for example, also pertain to questions that are common across multiple categories of merchant offerings (e.g., "how long does the battery last?" may be considered a generic question for all offering categories that involve portable electronic devices).

Such generic question data 331 may be predefined (e.g., based on a human-generated template) and stored in the questions database 330. Generic question data 331 may also be autogenerated based on an analysis (e.g., using the analytics facility 132) of customer-submitted questions. For example, the analytics facility 132 may (e.g., using a machine-learning system, natural language processing or other technique) determine that a given type of question is commonly asked by customers about offerings in a given category (e.g., "does it shrink?" may be commonly asked for merchant offerings in the t-shirt category). The analytics facility 132 may learn this pattern and generate (e.g., using natural language processing, machine-learning techniques, or other techniques) generic question data 331 containing a similar question and associated with that category of offering.

The e-commerce platform 100 may also automatically generate question data 331 that is specific to a merchant offering, for example based on elements, categories or themes in the description of the offering (e.g., dimensions, installation, color, size, etc.). A merchant may also submit questions for their own offering, for example as part of the process of creating a new listing. A merchant may also be offered a list of questions automatically generated by the e-commerce platform 100, from which the merchant may select one or more questions to be submitted into the questions database 330.

The analytics facility 132 may use the sentiment analyzer 346 to analyze a review, a comment left on the review, or other communications on the e-commerce platform 100 to determine a sentiment (e.g., positive, negative or optionally neural) to be associated with that review, comment or other communication (generally referred to as a communication).

In some examples, the sentiment analyzer 346 may analyze the communication based on one or more keywords that have been extracted (e.g., using the keyword extractor 344) from the communication. For example, the keyword extractor 344 may analyze the communication (and may also perform speech-to-text conversion of the communication, if the communication is in audio or video format). The keyword extractor 344 may use various suitable techniques for identifying one or more keywords from the communication. For example, the keyword extractor 344 may implement natural language processing (NLP) techniques, rules-based analysis, statistical analysis, machine-learning based techniques (supervised or unsupervised), or combinations thereof, among other possibilities. The extracted keyword(s) may be used as input to the sentiment analyzer 346.

The sentiment analyzer 346 may categorize the keyword(s) as being positive, negative or optionally neutral (e.g., using a lookup table or by reference to a repository of keywords associated with different sentiments). The categorization of the communication as being positive, negative or optionally neutral may be based, for example, on the number of positive or negative (or optionally neutral) keywords extracted from the communication.

The sentiment analyzer 346 may additionally or alternatively use natural language processing or other language parsing techniques (e.g., including machine-learning based techniques) to analyze the overall sentiment of the communication without relying only on keyword(s).

In some examples, the sentiment analyzer 346 may additionally or alternatively determine the sentiment of the communication without any reliance on the keyword(s). For example, the communication may include a quantitative indicator (e.g., a star rating or a score out of five). The sentiment analyzer 346 may identify the communication as positive or negative (or optionally neutral) by applying one or more thresholds to the quantitative indicator (e.g., above 4 stars is a positive review, below 2 stars is a negative review, and between 2 and 4 stars is a neutral review).

It should be noted that the sentiment analyzer 346 may also use the quantitative indicator to identify and categorize keywords as being positive, negative or optionally neutral (e.g., keywords frequently found in 5 star reviews may be determined to be positive keywords in general). In some examples, the sentiment analyzer 346 may use machine-learning based techniques to categorize keywords in such a manner. Such learned categorization of keywords may be used by the sentiment analyzer 346 to analyze other communications that do not include a quantitative indicator, for example.

In some examples, the sentiment analyzer 346 may be assisted by human sorting of different types of communications into positive or negative (or neutral). For example, such manual sorting may be used to help train a machine-learning based system to automatically identify a communication as positive or negative (or neutral) in sentiment.

The analytics facility 132 may use the affinity tracker 342 to determine and track affinity between customers or between a customer and a customer cohort, category or group on the e-commerce platform. In the present disclosure, "affinity" may represent how one customer is similar or dissimilar to another customer (or customer cohort), and may also represent how one customer (or customer cohort) agrees with or disagrees with another customer. In the present disclosure, positive affinity (indicating similarity or agreement) may be simply referred to as affinity whereas negative affinity (indicating dissimilarity or disagreement) may be explicitly indicated as being negative. When affinity is neither positive nor negative, this may be referred to as non-affinity (indicating two customers are neutral towards or unaware of each other). Similarity between customers may include a similarity of characteristics, habits, preferences, etc. Affinity may also include how well the attributes of one customer matches with the attributes of another customer (e.g., same age group, same gender, same marital status, same geographical location, etc.). Affinity may also include how positively or negatively one customer responds to information from another customer (e.g., making a purchase on the basis of a review may be a positive response; abandoning a cart on the basis of a review may be negative response). In some examples, a positive or negative response may be determined from a comment that one customer leaves on the review by another customer. In such cases, the sentiment analyzer 346 may be used to analyze whether the comment is positive or negative.

Affinity may be unidirectional (e.g., a first customer upvoting a review by a second customer may be a positive affinity from the first customer to the second customer) or bidirectional (e.g., a match of attributes between a first and a second customer may be a bidirectional affinity), or non-directional. In some examples, positive affinity between two customers may be determined on the basis of similar purchase histories or similar viewing histories. However, affinity in the present disclosure is not necessarily limited to similarity of purchase/viewing histories. Rather, affinity in the present disclosure may also take into account how one customer responds to information (e.g., a review) from another customer. Further, it should be understood that affinity between customers is not necessarily established on the basis of a social relationship between customers. For example two customers may have positive affinity on the basis of a match in attributes, but may not know each other. Further details of affinity will be understood in the context of examples discussed further below.

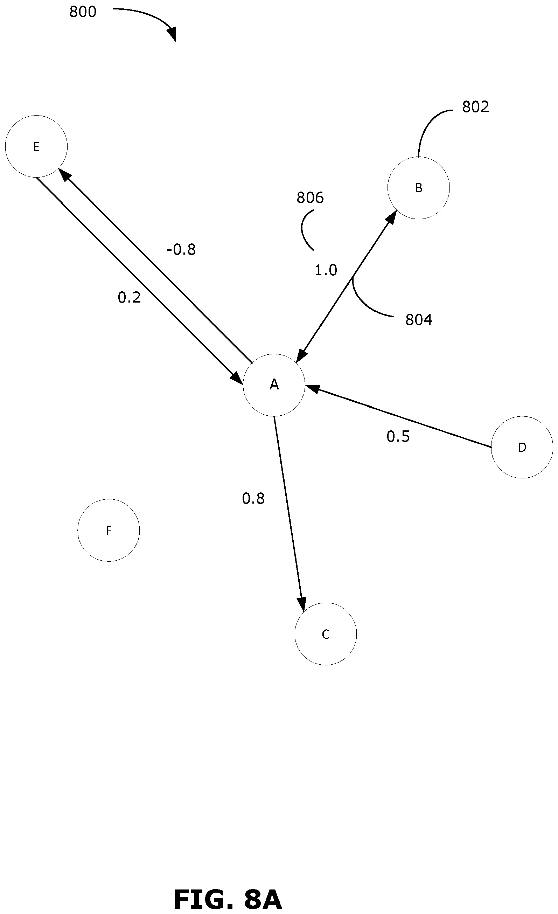

FIG. 8A illustrates an example affinity graph 800 that may be representative of the affinity information that is determined and stored by the affinity tracker 342. The affinity tracker 342 may store affinity information using a data structure representative of the affinity graph 800, or may use any other suitable data structure. The affinity graph 800 includes nodes 802 connected by edges 804. In this example, each edge 804 also has a weight 806. Each node 802 represents a respective customer, each edge 804 represents a positive or negative, unidirectional or bidirectional affinity between two customers, and each weight 806 represents the strength (positive or negative) of the affinity between two customers. The absence of an edge 804 between two nodes 802 may indicate that the corresponding two customers have zero affinity (or non-affinity) to each other, for example because the two customers have no interactions with each other on the e-commerce platform 100, the two customers have not matching attributes, or the positive and negative responses result in a net zero affinity.

In this example, there are six nodes 802 representing customers A, B, C, D, E and F. For simplicity, the present disclosure will refer to an edge between two customers using the format "edge AB" to refer to the edge 804 between the nodes 802 of customers A and B. In some instances, directionality may be indicated by an arrow, for example "edge A→B" may be used to refer to a unidirectional edge from the node 802 representing customer A to the node 802 representing customer B. In this example, the weight 806 associated with each edge 804 is normalized to a range between -1.0 and 1.0, where 1.0 represents a maximum positive affinity and -1.0 represents a maximum negative affinity (which may also be referred to as aversion).

In this example, edge AB is a bidirectional edge, with a maximum positive weight of 1.0; this may, for example, represent a match of multiple attributes between customers A and B. Edge A→C has a weight of 0.8; this may represent customer A having a strong positive response (e.g., making a purchase) to a review by customer C. Edge D→A has a weight of 0.5; this may represent customer D having a moderate positive response (e.g., adding an offering to a virtual cart) to a review by customer A. Edge A→E has a weight of - 0.8; this may represent customer A having a strong negative response (e.g., removing an offering from a virtual cart) to a review by customer E. Edge E→A has a weight of 0.2; this may represent customer E having a mild positive response (e.g., submitting an upvote) to a review by customer A. There is no edge between A and F; this may represent customer A having no interaction with reviews by customer F (and vice versa), or having no positive or negative response. It should be noted that the affinity between customers A and E is negative in the A→E direction, and positive in the E→A direction. This is because affinity may be determined based on individual customers' responses, and is not necessarily reciprocal in nature. In at least this manner, affinity as discussed herein may provide more nuanced and richer information about customers' behaviors and preferences, compared to conventional social graphs or comparison of purchase/viewing histories.

In some examples, in addition to an exact match of attributes, a similarity between reviewer and customer may be determined and reflected in the affinity graph. Various techniques may be used to determine similarity of attributes between customers. The various techniques may be used together. For example, a technique may be by determining whether there is a similar range of values in attributes. For example, a 25-year-old customer and a 23-year-old customer can be similar because they both fall into the 19-to-29-year-old category. Another technique may be by assigning a numerical value to each attribute (e.g., height, shoe size, age, income, etc.) and representing the customers as respective vectors of numbers; a correlation may then be calculated between the vectors, to arrive at a numerical value representing the similarity between the customers (e.g., a correlation value of 1 may represent 100% similarity, and a correlation value of 0 may represent 0% similarity). It should be understood that other approaches may be used. The similarity may be calculated as a similarity score (e.g., using the correlation value as the similarity score) which may be reflected in the weight 806 assigned to a bidirectional edge 804.

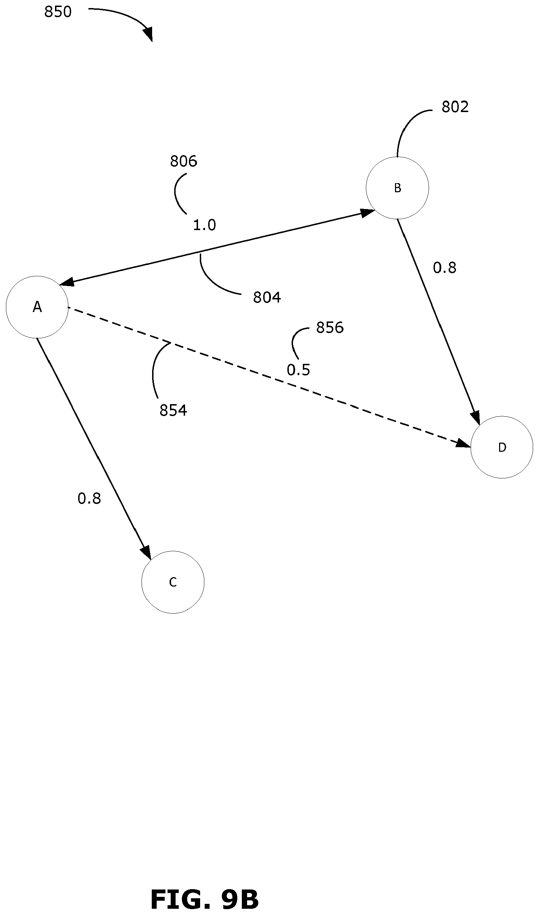

FIG. 8B illustrates another example affinity graph 850 that may be representative of the affinity information that is determined and stored by the affinity tracker 342. The affinity graph 850 of FIG. 8B is similar to the affinity graph 800 discussed above with respect to FIG. 8A, and shares similar features, such as nodes 802 connected by edges 804, and weights 806 associated with each edge 804. The example affinity graph 850 in FIG. 8B includes nodes 802 representing customers A, B, C and D, bidirectional edge AB, and directional edges B→D and A→C.

The affinity graph 850 in the example of FIG. 8B further represents inferred affinity. In the present disclosure, inferred affinity (which may also be referred to as second-hand affinity or secondary affinity, among other possible terms) refers to affinity between two customers that is determined based on affinity determined for a third customer. In FIG. 8B, the affinity between customers A and B is bidirectional and heavily weighted to be positive (e.g., based on a match of multiple attributes between the respective customer profiles). Customer B also shows a positive affinity towards customer D (e.g., customer B had a positive response, such as a purchase, to a review by customer D). On the basis of the strong affinity between customers A and B, it may be inferred that customer A would also have a positive affinity towards customer D. In the affinity graph 850, this inferred affinity is represented as an inferred edge 854 having an inferred weight 856. In this example, the inferred weight 856 for the inferred edge 854 is 0.5, which is less than the positive weight of 0.8 for the edge B→D. The inferred edge 854 may be associated with a lower inferred weight 856 because the positive affinity, being inferred, may be considered to be weaker than an actual positive response.

An example of inferred affinity is shown in FIG. 8B. Affinity may also be inferred in other ways. For example, affinity between customer A and customer D may be inferred based on the response of a cohort to which customer A belongs. A cohort may be a defined group to which customer A explicitly belongs (e.g., explicit membership in a social group), or may be a group to which customer A implicitly belongs (e.g., a demographic group). If the cohort, as a whole, has an overall positive response to customer D (e.g., a majority of the cohort has a positive response), then a positive affinity from customer A towards customer D may be inferred. If customer D belongs to the same cohort as customer A, then affinity may also be inferred on the basis of belonging to the same cohort. In some cases, membership in a cohort (whether explicit or implicit) may be reflected in attributes found in the customer's profile (e.g., demographic attributes stored in a profile reflect membership in a demographic cohort); hence belonging to the same cohort may be reflected in a match of one or more profile attributes. Affinity may also be inferred based on the overall response of a group that shares a similar geography (or other such characteristics) as customer A. In some examples, where affinity is inferred based on the response of a group, the inferred weight of that inferred affinity may be determined based on the statistical response of the group to customer D (e.g., the inferred weight may be the average normalized rating of the group).

Similar to the manner described above, affinity may also be inferred based on the response of customer A to members of a cohort to which customer D belongs (e.g., if customer A has a positive response to a review by customer C, and customer C and D belong to the same cohort). Further, affinity may also be inferred based on the response of a first cohort, to which customer A belongs, to a second cohort, to which customer D belongs.

Generally, inferred affinity may be considered to be weaker (and hence possibly assigned a lower weight) than affinity determined based on actual response of the customer. However, such inferred affinity may be useful to tailor a customer's experience when that customer has little or no historical information for determining affinity (e.g., if the customer is newly registered on the e-commerce platform 100).

In some examples, cohort-based determination of affinity may be useful for anonymizing the behavior and history of individual customers on the e-commerce platform 100. For example, rather than tracking the purchase history of individual customers, the purchase history of a cohort of customers (e.g., a demographic or geographic group) may be anonymized and tracked statistically. Such an approach may help to preserve privacy of individual customers, for example.

The affinity graphs 800 and 850 in FIGS. 8A and 8B are simplified examples; it should be understood that the e-commerce platform 100 may have many more customers and hence a more complicated affinity graph than the example shown. Further, the affinity graph may be used to represent affinity with respect to every customer.

Although normalized weights are illustrated in the example of FIGS. 8A and 8B, other methods of weighting the edges in the affinity graph may be used. In some examples, the affinity graph may not include weights, and edges may simply indicate positive or negative affinity. In some examples, edges may indicate only positive affinity, and negative affinity may not be represented in the affinity graph, in which case the affinity graph may not distinguish between negative affinity and zero affinity (or non-affinity).

It should be understood that the affinity graph may take other forms. Further, it should be understood that various ways of representing affinity may be used, other than using an affinity graph.

The use of affinity information (whether explicit or inferred, individualized or cohort-based) in the present disclosure may enable a deeper understanding of a customer's preferences, and enable better customization. By leveraging information gathered from the responses of multiple customers on the e-commerce platform, an individual customer may be provided with tailored reviews and more useful information.

The data illustrated and described with respect to FIGS. 5, 6, 8A and 8B are provided for illustration only. It should be understood that review data, profile data and question data, and affinity information (among other possible types of data and information) may be stored by the e-commerce platform 100 in various suitable formats, including tables, trees, matrices, etc. Further, there may be greater or fewer numbers of data fields for each data structure. Generally, the present disclosure is not limited to any particular data format, and may be adaptable to future developments in data management.

In some aspects of the present disclosure, the affinity determined between customer and reviewer may be used for better customization of reviews, for example through targeted prompting for creation of reviews.

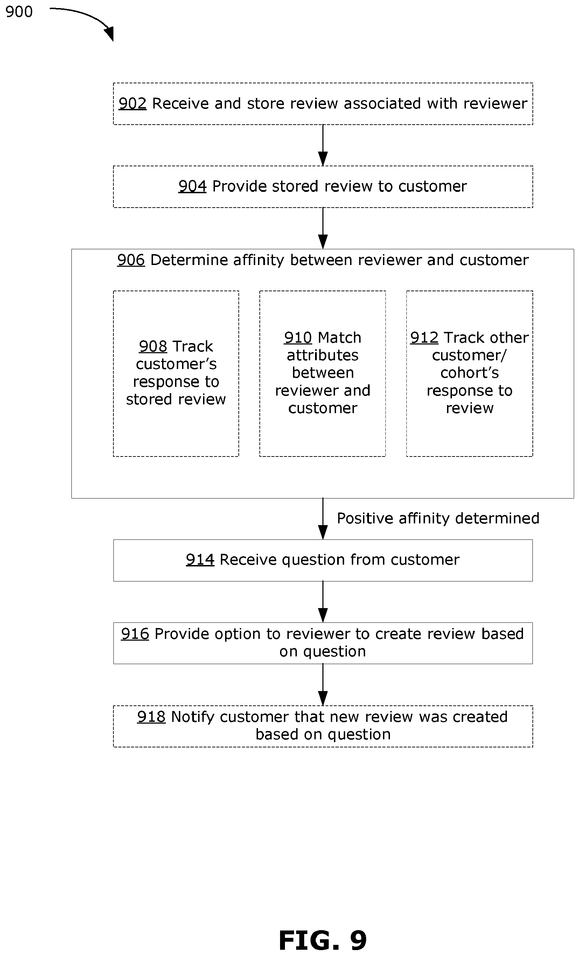

FIG. 9 is a flowchart illustrating an example method 900 to target prompting for creation of reviews. The method 900 may be implemented by the e-commerce platform 100 (e.g., using the analytics facility 132 and/or services 116 at the core server 710). The method 900 may be implemented by a processing device executing instructions.

Optionally, at 902, a review is received (e.g., submitted via a reviewer's electronic device 150). The review is stored (e.g., in the reviews database 310) and associated with the reviewer (e.g., associated with the reviewer's profile ID). The review is also associated with a merchant offering. The stored review may be in various suitable formats, such as text review, audio review, video review, star rating, and combinations thereof.

Optionally, at 904, the stored review is provided to a customer (e.g., displayed via the customer's electronic device 150). For example, the stored review may be provided to a customer when the customer navigates to a website for the reviewed offering, or selects an option to view more information about the offering.

In some examples, the stored review may be provided as part of a set of reviews (or simply a review set). The reviews presenter 354 may select and multiple reviews (e.g., from the reviews database 310) and provide the reviews as a single set, as discussed previously. In particular, the review set may be provided in a manner that enables the customer to perceive the review set as a single review.

The stored reviews that are selected to include in the review set may be selected based various criteria (e.g., affinity, upvotes, etc.), such as those discussed further below.

At 906, the affinity between the reviewer and the customer is determined. The determination of affinity may be performed by the analytics facility 132 (e.g., using the affinity tracker 342). As discussed above, affinity may be determined in various ways, and may include inferred affinity. In order to determine affinity, any one or more of steps 908, 910, 912 may be optionally performed.

Optionally, at 908, if a stored review associated with the reviewer was provided to the customer at 904, the customer's response to the stored review may be tracked. The customer's response may be tracked by the analytics facility 132, for example. Tracking may include tracking the customer's behavior on or off the e-commerce platform 100 (e.g., using cookies, browser fingerprinting, or other tracking techniques), including tracking the customer's subsequent purchases, viewing behavior, content sharing, comments, etc. Different behavior may be considered to be positive or negative (or neutral) responses to the review. In some examples, a weight may be further assigned to indicate how positive or negative the response is. For example, if the customer views the review for the merchant offering, and subsequently purchases that offering, this may be considered a strongly positive response (e.g., assigned a large positive weight, such as 0.8 on the normalized scale discussed above). Other positive responses may include, for example, adding the offering to a virtual shopping cart, viewing a detailed listing for the offering, prolonged or repeated viewing of the review, indicating approval (e.g., upvoting) of the review, sharing the review with another customer, etc., each of which may be further assigned respective predefined positive weights. Negative responses may include, for example, removing the offering from the virtual shopping cart, abandoning the virtual shopping cart, indicating disapproval (e.g., downvoting) of the review, etc., each of which may be further assigned respective predefined negative weights.

In some examples, the customer's response to the review may be determined based on a comment the customer has left on the review. The comment may be identified as a positive review or negative (or neutral) review. For example, sentiment analysis may be performed (e.g., using the sentiment analyzer 346).

In some examples, tracking the customer's response may not require determination of a cause-and-effect relationship between viewing the review and the response. For example, a positive response may be determined if the customer purchases the offering within a time frame (e.g., within one week, or within the same user session) subsequent to viewing the review, without requiring determining whether it was specifically the review that caused the purchase.

Optionally, at 910, affinity between the reviewer and the customer may be determined based on matching of one or more attributes between the reviewer's profile and the customer's profile.

In the present disclosure, the term "attribute" should be understood to refer to characteristics of the customer (or reviewer) or of a cohort, group or category the customer may be associated with, such as age, height, geographical location, marital status, gender, skin type, body shape, income, and the like. Such attributes may be explicitly identified by the customer (e.g., inputted in a profile) and/or may be implicitly determined based on the customer's behavior (e.g., purchase history, viewing history, etc.). In particular, it should be understood that an attribute may not be simply the customer's purchase history or viewing history, but rather the characteristics of the customer him/herself (which may be inferred from the purchase history or viewing history). In some examples, a customer's profile may include attributes (e.g., home address) without including any historical information. Conversely, in some examples a customer's profile may include historical information (e.g., a past purchase) without including any attributes.

In some examples, positive affinity may be determined when the number of matching attributes between reviewer and customer exceeds a predefined threshold (e.g., matching at least three attributes). In some examples, positive affinity may be determined when certain attributes, which are considered important attributes, match (e.g., matching in age and geography). In some examples, the attribute(s) that are considered important for determining affinity may change depending on the merchant offering reviewed. For example, size and height attributes may be considered important for determining affinity when the merchant offering is in the clothing category, but unimportant when the merchant offering is in the consumer electronics category.

In some examples, attributes of a reviewer who has provided one or more video reviews may be determined based on the contents of those videos. For example, video and, in particular, one or more frames (i.e. images) of a video, may be processed to identify visual attributes of the reviewer such as, for example, skin tone, eye color, approximate age and the like. In a particular example, image processing techniques may be used to identify the reviewer's face and features thereof and one or more of those portions of the image may be subjected to further processing in order to identify one or more attributes of the reviewer such as, for example, attributes mentioned above (e.g., skin tone, eye color, etc.). Additionally or alternatively, an audio track of a given video review by a reviewer may be processed to similar ends such as, for example, to identify a likely gender (e.g., based on speech frequency) and/or accent (and, thus, by inference, regional residence/origin) of that reviewer. Conveniently, by processing images and/or audio of a video in manners such as, for example, those outlined above, attributes of a reviewer featured in that video may be inferred and used in determining affinity between that reviewer (and their review) and various customers. Furthermore, it is noted that where a customer has left video reviews (i.e., a customer is also a reviewer), those review videos may be analyzed in order to identify attributes of that reviewer/customer as may be used in determining that reviewer's/customer's affinity in various other contexts (e.g., affinity with other reviewers).

Optionally, at 912, affinity between the reviewer and the customer may be determined based on tracking the response of another customer or a cohort of customers to the reviewer's review. As discussed above, this may enable affinity to be inferred. For example, if the customer belongs to a cohort and the cohort has an overall positive response to the reviewer's review, then a positive affinity between the customer and the reviewer may be inferred. Tracking the response of other customers or cohort may be performed using techniques similar to step 908 above. In the case of a cohort, tracking may be performed on a statistical basis, with anonymized data.

One or more of steps 908, 910, 912 may be used to determine affinity between the reviewer and customer. In the case where there is a conflict in affinities determined by optional steps 908, 910, 912 (e.g., at 908 the customer is found to have a positive response, but at 912 the cohort is found to have a negative response), predefined rules may be used to resolve the conflict. For example, a conflict resolution rule may be that the customer's actual response to the reviewer's review may always take precedent over the cohort's response.

The affinity tracker 342 may implement various rules and techniques (including machine-learning based techniques) to determine affinity between the reviewer and the customer. Determining and tracking affinity may be a continuous and ongoing task, for example updating every time the customer exhibits a certain behavior (e.g., purchase, add to virtual shopping cart, share a review, etc.) on the e-commerce platform 100. Alternatively, determining and tracking affinity may be performed only at certain times (e.g., at regular intervals, such as daily) or in response to certain triggers (e.g., when the customer submits a question at step 914).

In this example, it is assumed that a positive affinity between the reviewer and the customer is determined.

At 914, a question is received (e.g., from a customer electronic device 150) about a merchant offering (which may be the same as or different from the merchant offering that was reviewed in the stored review at optional steps 902 and 904). The customer may submit a question using an option that is available when viewing a listing of the merchant offering on a merchant's virtual storefront, for example.

When the question is submitted, new question data 331 may be generated and stored in the questions database 330. For example, the e-commerce platform 100 may assign the question data 331 a new question ID 332, associate the data 331 with the question content 333 submitted by the customer, and associate the question data 331 with the offering ID 334 of the merchant offering and the asker ID 335 corresponding to the customer's profile ID.

At 916, the reviewer is provided with an option to create a new review based on the submitted question. In particular, the reviewer is prompted to create the new review on the basis of the determined affinity between the reviewer and the customer. Thus, the question is provided to be answered by the reviewer who is already determined to be someone to whom the customer is similar and/or is likely to agree with. It may be expected that the customer would find the answer from the reviewer to be more useful than if the question were answered by any arbitrary reviewer or a reviewer to whom the customer has a negative affinity.

On the other hand, if the affinity was determined at step 906 to be negative affinity or non-affinity, the question would not be provided to the reviewer.

The reviewer may be provided with the option at step 916 only after the reviewer has made a verified purchase of the merchant offering associated with the question. For example, step 916 may, in addition to checking for a positive affinity between the reviewer and the customer, also check the purchase history of the reviewer (e.g., using information from the reviewer's profile) to determine that the reviewer has purchased the merchant offering.

The reviewer may use software tools provided by the reviews creator 352 to create the new review. For example, the reviews creator 352 may generate a prompt (e.g., displayed on the reviewer's homepage or summary page) to invite the reviewer to create a new review to answer the submitted question. For example, the reviews creator 352 may extract the question content 333, offering ID 334 and optionally asker ID 335 from the question data 331, and formulate this information into a prompt to the reviewer (e.g., "Answer Amy's question about the White Shirt: 'does it shrink?"'). The reviews creator 352 may provide options for submitting text, audio and/or video content for the review. The reviews creator 352 may also provide an option for submitted a quantitative indicator (e.g., a star rating) for the review.

The submitted review may (after any optional quality assessment) be stored in the reviews database 310. The question data 331 be updated with the review ID of the newly created review, and also updated with the answerer ID corresponding to the reviewer's profile ID.

In some examples, the reviewer may be provided with incentives for creating a new review to answer the submitted question. For example, the reviewer may be awarded points, ranking, discounts, etc.

Optionally, at 918, a notification may be generated to the customer that the new review was created based on the customer's submitted question. For example, the notification may be displayed on the customer's homepage or summary page. The notification may provide an option (e.g., a link) to view the review, or the review may be embedded in the notification itself.

After the customer views the review, the customer may have an option to indicate whether the review has answered the submitted question. This option for the customer to provide feedback may be used to evaluate whether the question has been answered, or whether the question remains unanswered. Such feedback may be used to determine whether an incentive (if applicable) should be awarded to the reviewer. Further, this feedback may also be used to determine affinity between the customer and reviewer.

In some examples, the steps 902-912 and the steps 914-918 may take place at separate times, and need not immediately follow in time. For example, the e-commerce platform 100 may track and determine affinity continuously. This affinity information may be used at some future time when the customer submits a question.

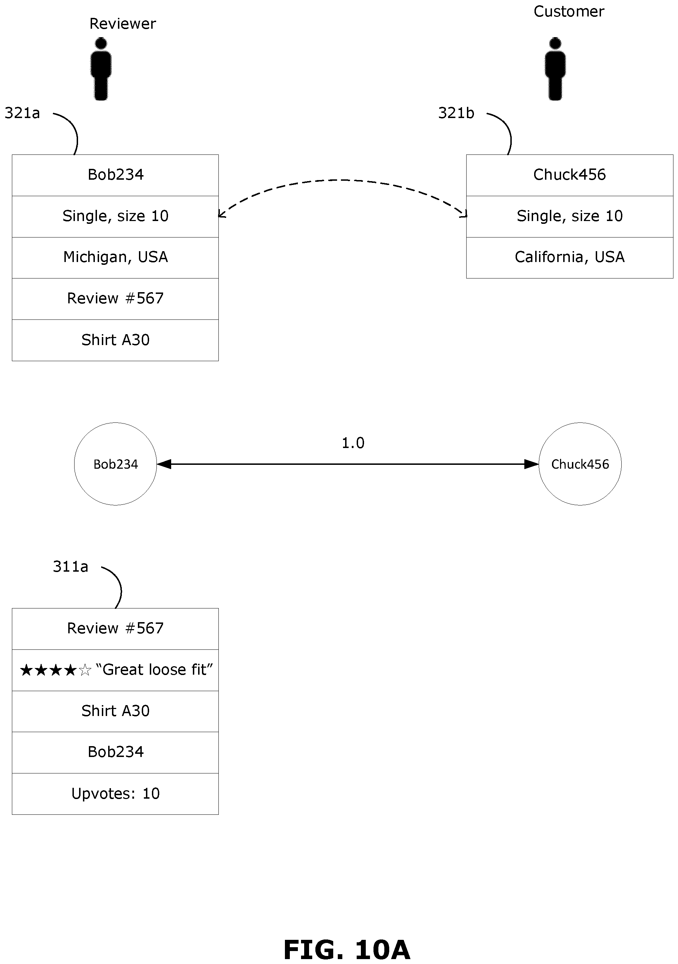

FIGS. 10A-10D schematically illustrate an example of the method 900. In this example, a reviewer is associated with a reviewer profile 321a and a customer is associated with customer profile 321b (both of which may be stored in the profiles database 320). The reviewer profile 321a includes the reviewer's ID "Bob234", reviewer's attributes "Single" and "size 10", reviewer's personal information "Michigan, USA", review history "Review #567", and purchase history "Shirt A30". Similarly, the customer profile 321b includes the customer's ID "Chuck456", customer's attributes "Single and "size 10", and customer's personal information "California, USA". In this simple example, affinity between the reviewer and customer has been determined based on a match of attributes (indicated by dashed arrow in FIG. 10A), as reflected in the bidirectional edge between corresponding nodes in the simplified affinity graph shown.

In FIG. 10A, review data 311a (which may be stored in the reviews database 310) is associated with the reviewer. The review data 311a has been assigned the ID "Review #567", has review content "Great loose fit" and four star rating, is associated with the merchant offering "Shirt A30" and the reviewer ID "Bob234". Further, the review has been upvoted 10 times.

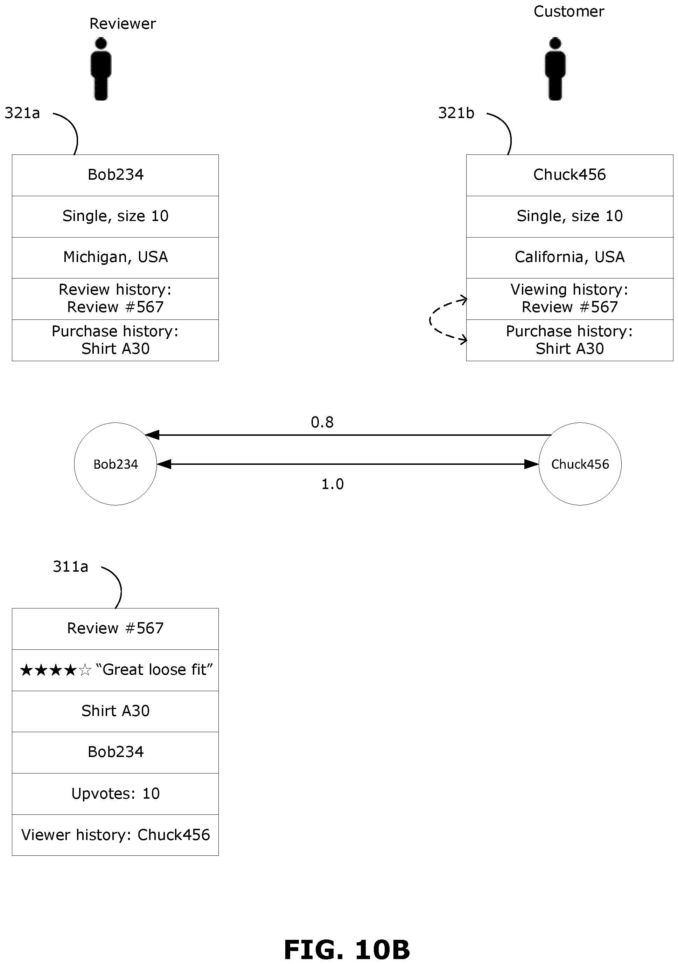

In FIG. 10B, the review is viewed by the customer, as reflected in the updated viewer history in the review data 311a and the updated viewing history in the customer's profile 321b. Subsequent to viewing the review, the customer makes a purchase of the reviewed offering, as reflected in the updated purchase history in the customer's profile 321b. On the basis of the viewing history and subsequent purchase (indicated by dashed arrow in FIG. 10B), it is determined (e.g., by the affinity tracker 342) that the customer has a positive response to the reviewer's review. This is indicated by the unidirectional edge from the customer's node to the reviewer's node in the affinity graph shown.

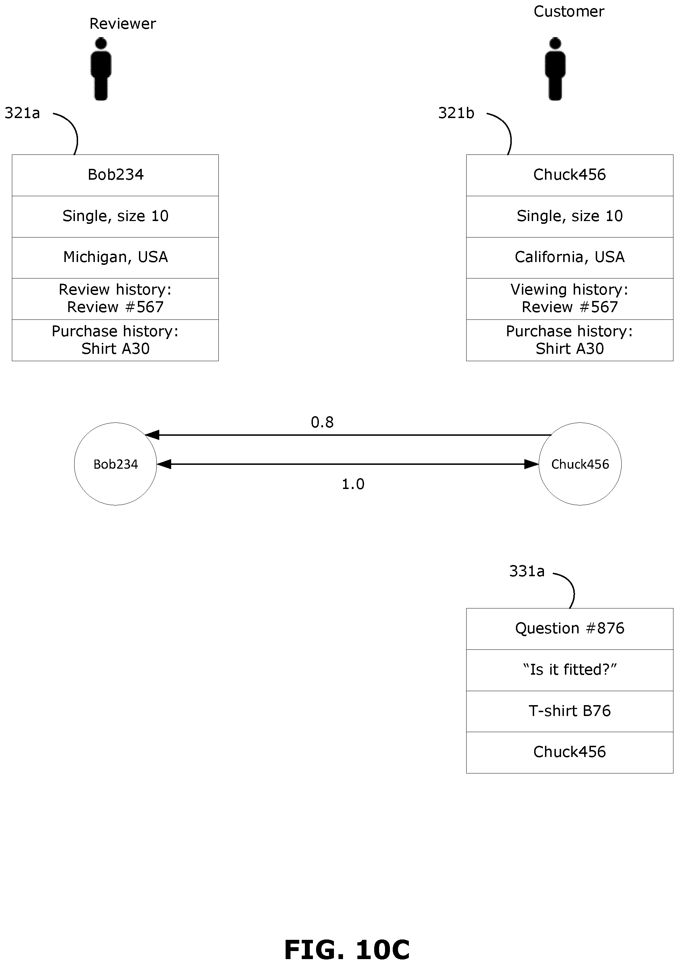

In FIG. 10C, at some future time, the customer submits a question about a merchant offering. The question data 331a is stored in the questions database 330. In this example, the question data 331a is assigned the ID "Question #876", contains the question content "Is it fitted?", is associated with the merchant offering "T-shirt B76" and the asker ID "Chuck456".

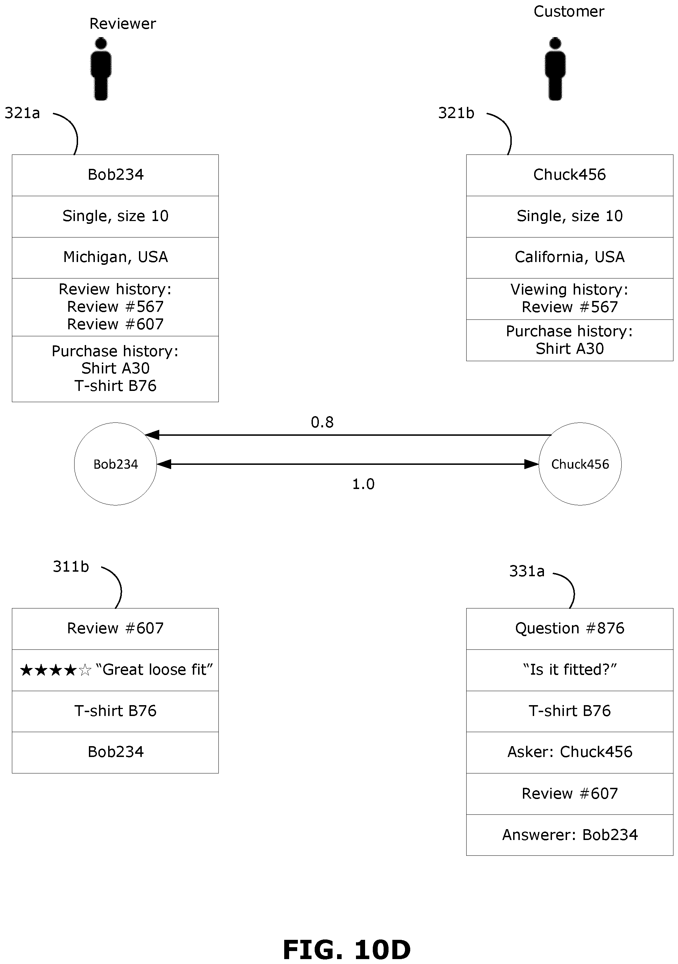

In FIG. 10D, the reviewer has purchased the merchant offering "T-shirt B76", as reflected in the updated purchase history in the reviewer's profile 321a. On the basis of the affinity determined between the reviewer and the customer, the reviewer is provided the option to create a new review to answer the customer's submitted question about the merchant offering "T-shirt B76". The reviewer creates a new review to answer the question, as shown in review data 311b. The question data 331a is updated to reflect that the question has been answered by "Bob234" in the review ID "Review #607". Optionally, the customer may be notified and/or provided with this review that answers the customer's submitted question. After the question data 331a has been associated with a review that answers the question, the question data 331a may be flagged as answered and may no longer be provided to future reviewers to answer. In other examples, the question data 331a may continue to be used to prompt creation of more reviews despite already having been answered.

This example illustrates how, using the method 900 for example, reviewers can be prompted to create reviews that are more likely to be useful to a customer.

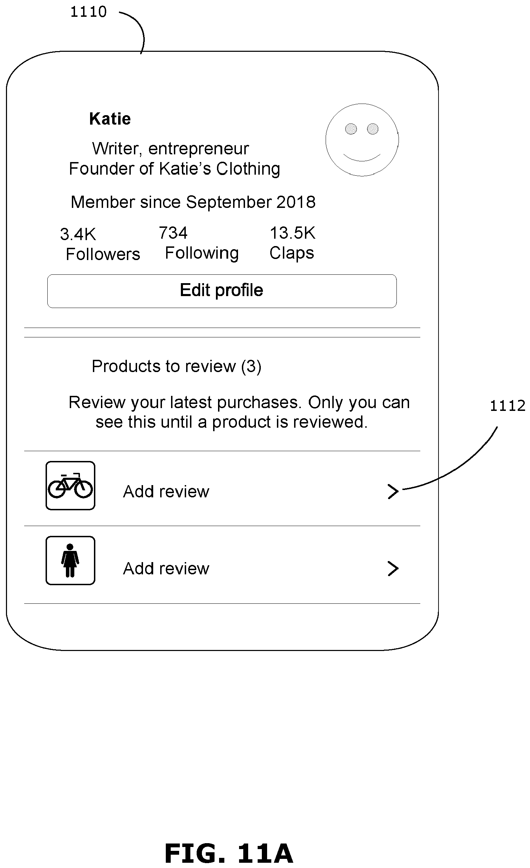

FIGS. 11A-11F show example user interfaces that may be provided to a reviewer (e.g., displayed on the reviewer's electronic device 150), for creating a new review. One or more of the user interfaces of FIGS. 11A-11F may be presented during the method 900.

FIG. 11A shows an example user interface 1110 that provides an option to create a review. The user interface 1110 may be presented at the homepage or summary page of a reviewer (in this case "Katie"). The user interface 1110 may provide an option 1112 for the reviewer to create one or more reviews for one or more verified purchases. The option 1112 may be provided only for purchases for which the reviewer has not yet created a review.

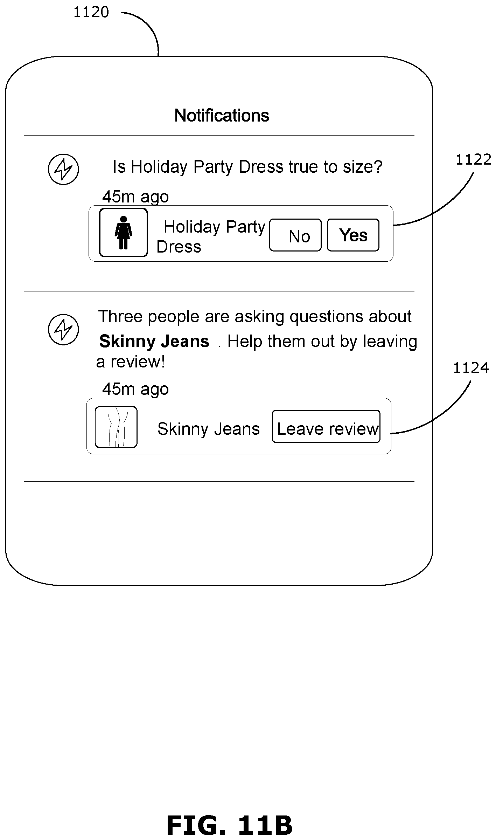

FIG. 11B shows another example user interface 1120 that provides an option to create a review. The user interface 1120 may be presented at a notification page or may be a part of the homepage or summary page of the reviewer. In this example, the user interface 1120 provides options 1122, 1124 for creating a review to answer particular questions about particular merchant offerings (which have been purchased by the reviewer). Each option 1122, 1124 includes an identification (e.g., product name and/or representative image) of the merchant offering to be reviewed. The option 1122 indicates a question (which may be a customer-submitted question or a generic question, for example drawn from the questions database 330) to be answered in the review. The option 1122 provides simple Yes/No selections for answering the question, however the option 1122 may also enable the reviewer to submit a more detailed review. The option 1124 indicates that there are customer-submitted questions pertaining to the merchant offering. Selection of the option 1124 may lead to a display of the questions that have been submitted, for example.

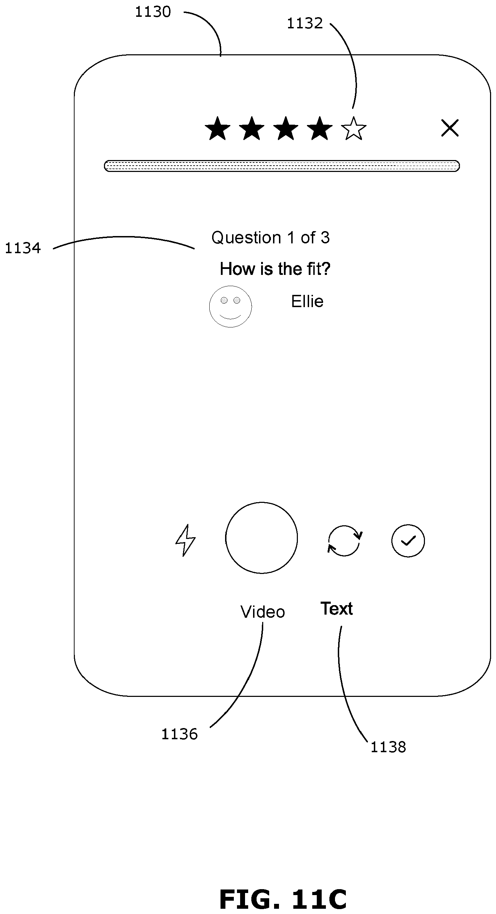

After selection of an option to create a new review (e.g., from the user interface 1110 or the user interface 1120), the user interface 1130 of FIG. 11C may be displayed. The user interface 1130 provides options for creating the review. The user interface 1130 includes a quantitative indicator 1132 (e.g., a star rating out of five) that the reviewer may select (e.g., via input on the user interface 1130 or via input on another earlier user interface). The user interface 1130 displays a prompt 1134 for the review. In this example, the prompt 1134 includes a question "How is the fit?" and an identifier "Ellie" of the customer who asked the question. The prompt 1134 also indicates that the question is one of multiple questions for the merchant offering. The user interface 1130 includes an option 1136 to provide a video review, and an option 1138 to provide text review. In some examples, the user interface 1130 may also provide an option to skip the current question, an option to submit a review without answering a specific question and/or an option to submit only the quantitative indicator 1132 as the review, among other possible variations.

In some examples, the reviewer may be prompted to answer a defined number of questions (e.g., 3-5 questions), each question being prompted by a respective user interface. A prompted question may be tailored to the reviewer, for example based on the determined affinity between the reviewer and the customer who asked the question, as discussed above. In some examples, the prompted questions may include one or more questions that are not based on determined affinity. For example, if the reviewer does not have positive affinity with any customer asking a question, the reviewer may be prompted to answer a generic question or may be prompted to answer a customer-submitted question regardless of the non-affinity (or negative affinity). In another example, there are many customer-submitted questions that suit the reviewer (based on determined affinity), the reviewer may be prompted to answer only a subset of questions (e.g., only up to the defined number of questions, such as 3-5 questions). The subset of customer-submitted questions provided to the reviewer to answer may be selected in order to prioritize those questions that have not yet been answered (or that have only very few answers), or those questions whose askers have the highest affinity with the reviewer, for example.

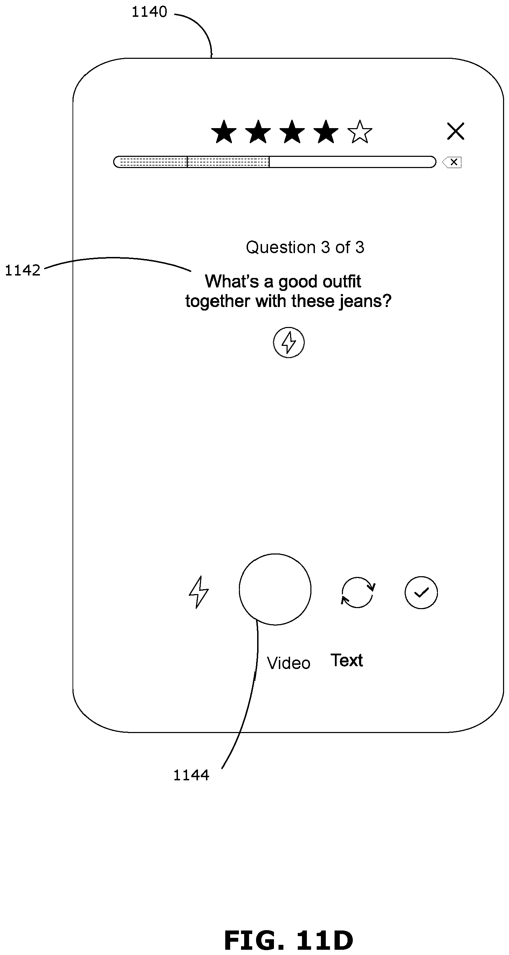

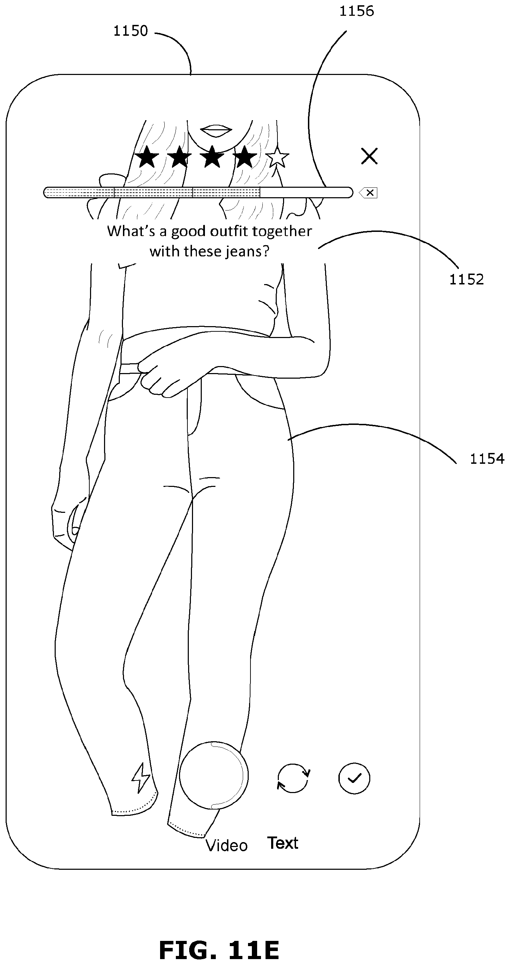

FIG. 11D shows another user interface 1140 that may be used to create the review. The user interface 1140 is similar to the user interface 1130, but provides a prompt 1142 for answering a different question (in this example, question three out of three) related to the merchant offering. The prompt 1142 does not include an identifier of the asker of the question. This may be because the question is a generic question, a question automatically generated by the platform 100 or received from a merchant, or the asker wished to remain anonymous, for example. The user interface 1140 provides an option 1144 to begin recording a video review. After selection of the option 1144, the user interface 1150 of FIG. 11E may be displayed.

The user interface 1150 displays a prompt 1152 indicating the question that is to be answered by the video review, and also displays a live image 1154 of the video being recorded. The user interface 1150 includes a progress bar 1156 indicating the length of the video recorded thus far, and the maximum length that can be recorded for the video review. For example, a maximum video length (e.g., 15-30s) may be defined for video reviews, to help maintain efficiency of reviews. Excessively long reviews may also be undesirable because long reviews are less likely to be viewed by customers, and because long reviews take up greater storage in the reviews database 310.

Although the reviewer may answer multiple questions relating to the same merchant offering, and may answer multiple questions sequentially, a separate review is created for answering each question. Each review is assigned a respective different review ID and associated with a respective different question ID. This may enable reviews to be presented to customers in a more flexible way (e.g., customers only need to view the review that is related to their own question). The reviewer may perceive the creation of multiple reviews as creation of a single seamless or continuous review, which may be a more user-friendly experience for the reviewer.

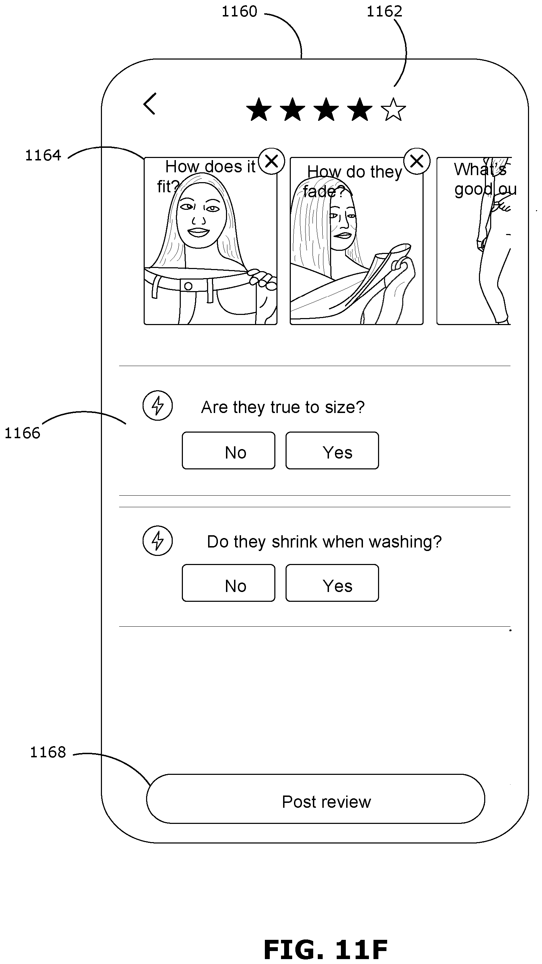

After a reviewer has answered the prompted questions (or after the reviewer has selected an option to stop providing reviews) the user interface 1160 of FIG. 11F may be displayed. The user interface 1160 displays the reviewer's selected quantitative indicator 1162 for the review (in this example, four out of five stars), and thumbnails 1164 or previews of the reviews that have been created (e.g., using the user interfaces 1140, 1150 discussed above). In this example, separate thumbnails 1164 are displayed corresponding to each review that was created to answer each different question. The reviewer may, for example, select (e.g., click on) a thumbnail 1164 to view the corresponding review, and may also have an option to delete that corresponding review. The user interface 1160 in this example also provides prompts 1166 for the reviewer to answer one or more additional questions that may not have been already addressed in the created reviews. The prompts 1166 may include simple Yes/No options to answer the questions or include an option to begin recording a video review (e.g., 1144 in FIG. 11D). The user interface 1160 also includes an option 1168 for the reviewer to submit all created reviews. After selecting the option 1168 all reviews that have been created are received by the e-commerce platform 100 and may be stored in the reviews database 310 (after quality assessment, if applicable).

Although the examples shown in FIGS. 11A-11F relate to creation of video reviews, it should be understood that other user interfaces (which may be similar to those discussed above) may be presented for creation of reviews in other formats, with similar prompting to answer questions. Further, it should be understood that, when presented with multiple questions to answer, the reviewer may create reviews using any format, and may answer different questions using different review formats.

In some aspects of the present disclosure, the affinity determined between customer and reviewer may be used for better customization of the reviews that are presented to a customer.

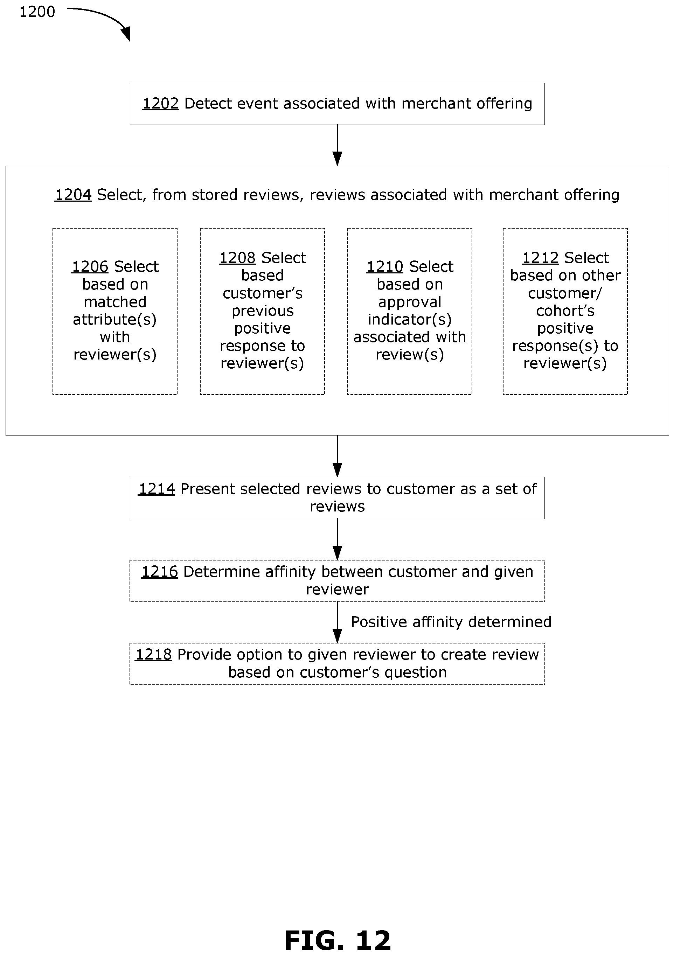

FIG. 12 is a flowchart illustrating an example method 1200 for selecting reviews to present to a customer, based on affinity. The method 1200 may be implemented by the e-commerce platform 100 (e.g., using the analytics facility 132 and/or services 116 at the core server 710). The method 1200 may be implemented by a processing device executing instructions.

At 1202, the e-commerce platform 100 detects an event associated with a merchant offering. The event may be any event that may trigger display of reviews, including a customer action (e.g., viewing a listing for the merchant offering, searching for offerings in the same category as the merchant offering, viewing listings in the same category as the merchant offering, logging onto the e-commerce platform 100, etc.), a merchant action (e.g., sending an advertisement to customers, initiating a discount for the merchant offering, etc.), a time-based trigger (e.g., the start of a season for a seasonal merchant offering) and may include predicted events and events outside of the e-commerce platform 100. Predicted events may be based on predications generated by the analytics facility 132 (e.g., using a machine-learning system) for example, which may predict or estimate a customer's likely interest in the merchant offering (e.g., based on the customer's purchase history, viewing history and/or search history). Events outside of the e-commerce platform 100 may be tracked using any suitable tracking technique (e.g., using cookies or browser fingerprinting), for example.

At 1204, immediately or some time after the event has been detected, a plurality of reviews are selected that are associated with the merchant offering. The selection of reviews may be performed by the reviews presenter 354, which queries and selects reviews stored in the reviews database 310. As discussed above, the reviews presenter 354 may query and select reviews based on the metadata associated with each review (e.g., as shown in FIG. 6) without inspecting the actual content of each review. The selection of reviews is customized to the customer. For example, the selection of reviews may include one or more of optional steps 1206, 1208, 1210.

Optionally, at 1206, one or more reviews may be selected to be presented to the customer based on a match of one or more attributes between the customer's profile and the respective reviewer's profile. Similar to previous discussion, a minimum number of attributes may need to be matched between the customer and the reviewer before the reviewer's review is selected to be presented to the customer, or certain important attribute(s) (which may be dependent on the category of merchant offering) may need to be matched between the customer and the reviewer before the reviewer's review is selected to be presented to the customer.

Optionally, at 1208, one or more reviews may be selected to be presented to the customer based on the customer having a previous positive response to another review by the respective reviewer.

Optionally, at 1210, one or more reviews may be selected to be presented to the customer based on approval indicator(s) associated with the respective review(s). An approval indicator may include, for example, upvotes associated with the review (e.g., a number of upvotes that is higher than a predefined threshold), positive comments submitted regarding the review (e.g., comments may be analyzed by the sentiment analyzer 346 to identify positive comments), or other similar signs that the review is approved by other customers.

Optionally, at 1212, one or more reviews may be selected to be present to the customer based on positive responses to the respective reviewer from other similar customers and/or from the cohort to which the customer belongs.

The steps 1206, 1208, 1210, 1212 may be performed in any order, and may be performed in parallel. The review(s) selected by each step 1206, 1208, 1210, 1212 may be different, or may have one or more reviews in common. For example, a review that is selected based on matched attributes (e.g., at step 1206) may also be selected based on high approval (e.g., at step 1210).

Although steps 1206, 1208, 1210, 1212 have been described as separate steps, two or more of the steps 1206, 1208, 1210, 1212 may be combined. For example, reviews may be selected based on affinity. As discussed above, affinity may encompass consideration of matching attributes between customer and reviewer, the customer's positive/negative responses to a reviewer, a cohort's positive/negative responses to a reviewer, and inferred affinity, among others.

The reviews selected by the reviews presenter 354 may include reviews by multiple different reviewers. In some examples, one or more of the selected reviews are associated with a respective question. The reviews selected by the reviews presenter 354 may include reviews that answer multiple different questions. In some examples, the reviews selected by the reviews presenter 354 may include multiple reviews from different reviewers that answer the same question.

The selection of reviews at step 1204 may also include selecting reviews based on commonly asked questions for the category of offering, questions that are commonly asked by the specific customer, questions that are commonly asked by the customer's cohort, questions that are commonly asked by other customers that share attributes with the specific customer, questions submitted by the merchant for the specific offering, and/or most recently asked questions, among other possibilities.

In some examples, if the customer has previously submitted a question related to the merchant offering, the selection of reviews at step 1204 may prioritize reviews that are associated with the customer's submitted question.

The selection of reviews may also include filtering the selected reviews to ensure that the selected reviews answer different questions. For example, the reviews presenter 354 may ensure that different question IDs are associated with each of the selected reviews.

At 1214, the selected reviews are presented to the customer as a single set of reviews (also referred to as a review set). The review set may order the selected reviews according to the selection criteria used at step 1204. For example, a review having a greater number of matched attributes between the customer and the respective reviewer may be prioritized (e.g., presented earlier) in the review set. Further, a review that satisfies a greater number of selection criteria (e.g., a review from a reviewer having matched attributes and that also has a high number of upvotes) may be prioritized over a review that satisfies a smaller number of selection criteria (e.g., a review that was selected only on the basis of a high number of upvotes).

In some examples, the review set may be presented in a way such that the customer perceives the review set as a single, longer review rather than multiple shorter reviews. For example, the reviews presenter 354 may present a set of video reviews as a seamless or continuous stream of videos. Providing the review set to the customer in this way may provide a more user-friendly experience to the customer (e.g., having less latency and less disconnect between reviews).

In some examples, each review in the review set was created to answer a particular question about the merchant offering. Presentation of the review set may include an indication of the question that is being answered by the respective review. For example, if the review set is a set of text reviews, the question answered by each respective text review may be displayed above the text review. In another example, if the review set is a set of audio or video reviews, the question answered by each respective review may be displayed as text while the audio or video review is being played, and the displayed question may be automatically updated as the review set seamlessly moves to the next review.

In some examples, presentation of the review set may provide to the customer information about why a particular review was selected to be presented. For example, the selection criteria used at step 1204 (e.g., selection based on matched attributes, selection based on customer's previous positive response to reviewer, selection based on approval indicator and/or selection based on other customer/cohort's positive response to review) may be displayed to the customer together with the respective review (e.g., as text above a text review, or as text displayed during playback of an audio or video review).

Optionally, at 1216, the customer's response to one or more of the presented reviews in the review set may be tracked, to further determine affinity between the customer and the respective reviewer. The customer's behavior while the review set is presented may be tracked. For example, if a customer plays a particular video (or audio) review within the review set for a greater length of time or returns to that video (or audio) review for a greater number of repeat playbacks; or if a customer selects a text review for more detail, this may be considered a positive response to the reviewer associated with that review within the review set. In another example, if a customer stops playback of the review set, leaves the reviews page, or leaves the e-commerce platform 100 during playback of a particular video (or audio) review, this may be considered a negative response to the reviewer associated with that review within the review set. In some examples, during presentation of the review set, the customer may be provided with an option (e.g., a link) to purchase or view more details about the merchant offering. If the customer selects the option to purchase or view more details about the merchant offering during playback of a particular video (or audio) review, this may be considered a positive response to the reviewer associated with that review within the review set. The customer may also be provided options to indicate approval (e.g., upvote) of a particular review in the review set or to leave a comment for a particular review in the review set. An indication of approval or a positive comment (e.g., identified as being positive by the sentiment analyzer 346) may also be used to track the customer's positive response. Other techniques for tracking a customer's response to a particular review within the review set may be performed.

If a positive affinity is determined between the customer and a particular reviewer, then, at 1218, that reviewer may be provided with an option to create a new review based on a question submitted by the customer (e.g., similar to the method 900 discussed above).

In some examples, the step 1218 may take place at a later future time, and need not immediately follow step 1216 in time. For example, the e-commerce platform 100 may track and determine affinity continuously. This affinity information may be used at some future time when the customer submits a question.

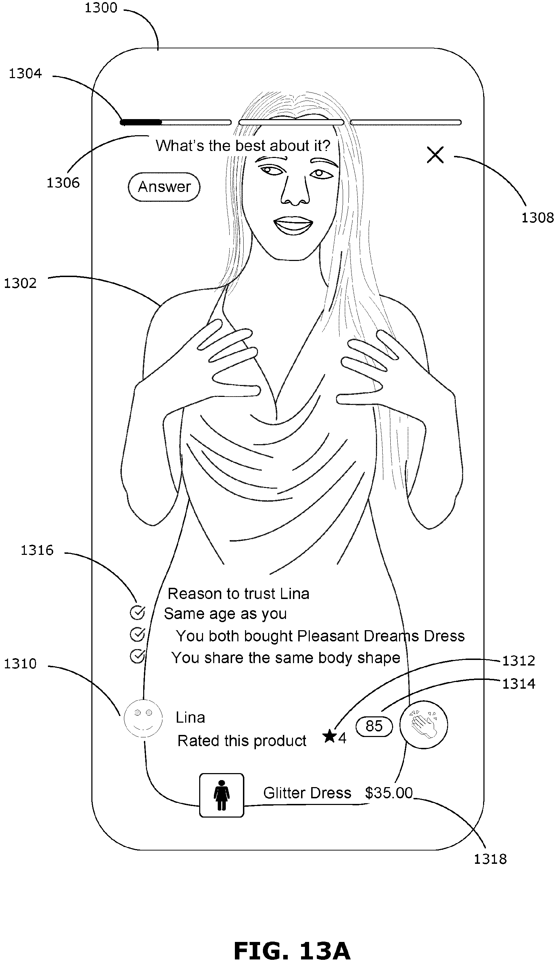

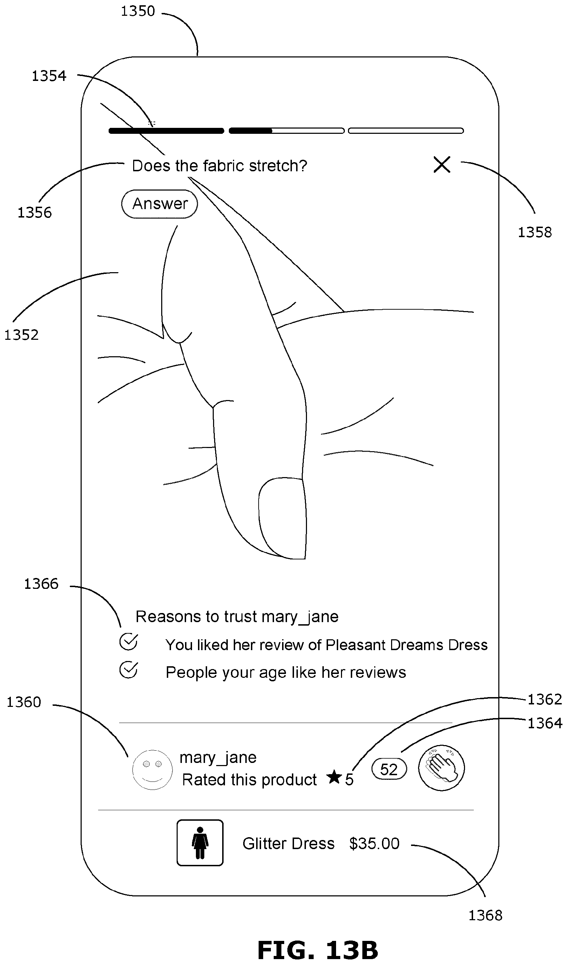

FIGS. 13A and 13B show example user interfaces that may be provided to a customer (e.g., displayed on the customer's electronic device 150), for presenting the selected plurality of reviews as a review set. One or both of the user interfaces of FIGS. 13A and 13B may be presented during the method 1200. In these examples, the review set includes multiple video reviews, which are provided in a seamless manner such that the customer may perceive the review set as a single review. In other examples, the review set may include reviews in other formats.

In FIG. 13A, the example user interface 1300 may be displayed after the customer selects an option (not shown) to view a review set related to a particular merchant offering, in this case "Glitter Dress". The user interface 1300 shows the first video review 1302. The playback progress of the video review 1302 is shown in the progress bar 1304, which in this example is also divided into three segments to indicate that there are three parts to the review set (e.g., three video reviews answering respective questions). A question indicator 1306 displays the question that the review 1302 is intended to answer (in this case "What's the best about it?"). There is also a cancel option 1308 that the customer may select to stop playback of the current review 1302 or to stop playback of all reviews in the review set. In some examples, selection of the cancel option 1308 may be considered a negative response to the current review 1302. This may be used to determine a negative affinity or non-affinity between the customer and the reviewer "Una", which may influence whether the customer will be shown reviews by the reviewer "Una" in the future, and whether the reviewer "Una" will be prompted to answer questions submitted by the customer in the future.

The user interface 1300 also provides reviewer information 1310, in this case identifying the review as "Una", and including a quantitative indicator 1312 provided by the reviewer (in this case, four out of five stars) for the merchant offering. Also provided is an approval indicator 1314 representing how other customers have responded to the current review 1302. In this example, the approval indicator 1314 shows 85 upvotes for the review 1302. The user interface 1300 also provides information 1316 indicating why the particular review 1302 was selected to be presented to the customer. In this example, the information 1316 indicates that the review 1302 was selected based on matched attributes and matched purchase history between the customer and the reviewer.

The user interface 1300 also includes an option 1318 to view details of the merchant offering. The option 1318 may cause the listing for the merchant offering to be displayed, or may provide an option for purchasing the merchant offering, for example. Selection of the option 1318 may be considered a positive response to the current review 1302. This may be used to determine a positive affinity between the customer and the reviewer "Una", which may influence whether the customer will be shown reviews by the reviewer "Una" in the future, and whether the reviewer "Una" will be prompted to answer questions submitted by the customer in the future.

Assuming the customer continues to view the presented review set, the user interface 1350 of FIG. 13B may be provided subsequent to the user interface 1300, to present another review 1352 within the same review set. As shown by the progress bar 1354, the review 1352 is in a later portion of the review set, in this case a second section of the review set. The question indicator 1356 shows that the review 1352 is answering a different question than the review 1302 (in this case "Does the fabric stretch?").

The user interface 1350 provides reviewer information 1360 indicating that the review 1352 is by a different reviewer, "mary_jane", who provided a different quantitative indicator 1362 (in this case, five out of five stars) than previously. The user interface 1350 also shows the approval indicator 1364 associated with the review 1352.

The user interface 1350 also provides information 1366 indicating why the particular review 1352 was selected to be presented to the customer. In this example, the information 1366 indicates that the review 1352 was selected based on the customer's positive response to another review by this reviewer, and based on a positive response by the cohort (in this case, the age group of the customer) to this reviewer.

If the customer selects the cancel option 1358, this may be considered a negative response to the reviewer "mary_jane". If the customer selects the option 1368 to view the listing or to purchase the merchant offering, this may be considered a positive response to the reviewer "mary_jane". Such negative or positive response may be used to determine the affinity between the customer and the reviewer "mary_jane", which may influence whether the customer will be shown reviews by the reviewer "mary_jane" in the future, and whether the reviewer "mary_jane" will be prompted to answer questions submitted by the customer in the future.

In some examples, the customer may be provided an option (e.g., in the interfaces 1300, 1350, or in another user interface) to save and/or share the review set. The review set may be saved and/or shared as a set of indices or identifiers (e.g., a set of review IDs) that reference the reviews that have been selected in the review set.

The examples of FIGS. 13A and 13B illustrate how, using the method 1200 for example, a customer may be provided with a set of reviews that may be better customized for the customer (e.g., from reviewers that match the customer's attributes and/or from reviewers with whom the customer has positive affinity). In this way, the customer may be presented with more useful information about the merchant offering, which may increase the likelihood of the customer purchasing the merchant offering and/or having a positive user experience on the e-commerce platform 100.

Although the methods 900, 1200 have been described above as separate methods, it should be understood that the methods 900, 1200 may be used together, may be combined into a single method, and/or may interact together. For example, the customer's response to a presented review set, as part of the method 1200, may be used to track affinity between the customer and a reviewer, which may be the basis for providing the reviewer with an option to answer the customer's question, as part of the method 900.

In various examples, the present disclosure has described reviews as having a question and answer format, in which each review is intended to provide an answer to a particular question. It should be understood that aspects of the present disclosure may be implemented without using the question and answer format. For example, rather than prompting a reviewer to create a review to answer a particular question, a reviewer may be prompted to create a review about a particular merchant offering. Similarly, rather than present a set of reviews to a customer that answer different questions about a merchant offering, the customer may be presented with a set of reviews about the offering by different reviewers.

Although the present disclosure describes methods and processes with steps in a certain order, one or more steps of the methods and processes may be omitted or altered as appropriate. One or more steps may take place in an order other than that in which they are described, as appropriate.

Although the present disclosure is described, at least in part, in terms of methods, a person of ordinary skill in the art will understand that the present disclosure is also directed to the various components for performing at least some of the aspects and features of the described methods, be it by way of hardware components, software or any combination of the two. Accordingly, the technical solution of the present disclosure may be embodied in the form of a software product. A suitable software product may be stored in a pre-recorded storage device or other similar non-volatile or non-transitory computer readable medium, including DVDs, CD-ROMs, USB flash disk, a removable hard disk, or other storage media, for example. The software product includes instructions tangibly stored thereon that enable a processing device (e.g., a personal computer, a server, or a network device) to execute examples of the methods disclosed herein.

The present disclosure may be embodied in other specific forms without departing from the subject matter of the claims. The described example embodiments are to be considered in all respects as being only illustrative and not restrictive. Selected features from one or more of the above-described embodiments may be combined to create alternative embodiments not explicitly described, features suitable for such combinations being understood within the scope of this disclosure.

All values and sub-ranges within disclosed ranges are also disclosed. Also, although the systems, devices and processes disclosed and shown herein may comprise a specific number of elements/components, the systems, devices and assemblies could be modified to include additional or fewer of such elements/components. For example, although any of the elements/components disclosed may be referenced as being singular, the embodiments disclosed herein could be modified to include a plurality of such elements/components. The subject matter described herein intends to cover and embrace all suitable changes in technology.

All referenced documents are hereby incorporated by reference in their entireties.

## Claims

1. A method, comprising:
in response to a first event associated with a first merchant offering, presenting a set of reviews to a first customer, the set of reviews including a plurality of selected reviews associated with the first merchant offering;
wherein at least a first review in the plurality of selected reviews is selected, from a plurality of stored reviews, based on a match of one or more attributes between a profile of the first customer and a profile of a first reviewer associated with the first review.

2. The method of claim 1, further comprising:
selecting, from the plurality of stored reviews, at least the first review or a second review to include in the plurality of selected reviews, based on an approval indicator associated with the first or second review.

3. The method of claim 1, further comprising:
selecting, from the plurality of stored reviews, at least the first review or a second review to include in the plurality of selected reviews, based on a second customer having a positive response to the first or second review, and wherein one or more attributes in a profile of the second customer match with the profile of the first customer.

4. The method of any of claims 1 to 3, further comprising:
determining an affinity between the first reviewer or a second reviewer and the first customer; and
presenting a third review to the first customer, the third review being associated with the first or second reviewer, the third review being presented based on the determined affinity.

5. The method of claim 4, wherein the affinity between the first or second reviewer and the first customer is determined based on a positive response by the first customer to the first review or a second review associated with the second reviewer.

6. The method of claim 4, further comprising:
receiving a question from the first customer, the question relating to the first merchant offering or a second merchant offering; and
providing an option to the first or second reviewer, via a reviewer electronic device, to create a new review based on the question, the option being provided to the first or second reviewer based on the determined affinity.

7. The method of any preceding claim, wherein each of the plurality of selected reviews is a selected video review, and wherein the plurality of selected reviews is presented as a seamless video stream comprising the plurality of selected video reviews.

8. The method of claim 7, further comprising ordering the plurality of selected video reviews in the set of reviews based on number of matched attributes between profiles of respective reviewers associated with the plurality of selected video reviews and the profile of the first customer.

9. A system comprising:
a processor in communication with a storage, the processor configured to execute instructions to cause the system to carry out the method of any preceding claim.

10. A computer program which when executed by a computer, causes the computer to carry out the steps of the method of any one of claims 1 to 8.
